# EUROPEAN PATENT APPLICATION

(11) **EP 1 284 438 A2**
(43) Date of publication of application: **19.02.2003**
(21) Application number: 02018353.9
(22) Date of filing: 14.08.2002
(51) Int. Cl.: G03C 3/00, G03B 17/26

(54) **Method and apparatus for manufacturing film cartridge plate**

(30) Priority: 14.08.2001 JP 2001246017; 21.08.2001 JP 2001250453; 25.09.2001 JP 2001291187; 28.09.2001 JP 2001303149; 26.10.2001 JP 2001329495; 29.10.2001 JP 2001330650; 28.02.2002 JP 2002053013; 28.02.2002 JP 2002053014; 28.02.2002 JP 2002053015; 28.02.2002 JP 2002053016; 28.02.2002 JP 2002053017; 28.02.2002 JP 2002053018
(71) Applicant: FUJI PHOTO FILM CO., LTD., Kanagawa (JP)
(72) Inventor: Sekino, Masayoshi, Minami-Ashigara-shi,Kanagawa (JP); Tsuchiya, Junichi, Minami-Ashigara-shi,Kanagawa (JP); Nakata, Shuji, Minami-Ashigara-shi,Kanagawa (JP)
(74) Representative: Grünecker, Kinkeldey, Stockmair & Schwanhäusser Anwaltssozietät

(57) **Abstract**

A reduction of equipment is realized by uniting the small diameter bending station and acute-angle bending station. A ribbon adhering station (14) that adheres ribbons (54) to the both ends (30B, 30C) of sheet metals (30) and cuts the ribbons (54) is arranged on the downstream side in the sheet metal transfer direction of the small diameter bending station/acute-angle bending station (22). A separation station (16) that separates sheet metals (30) into OK and NG products is positioned on the downstream side in the sheet metal transfer direction of the ribbon adhering station (14), allowing this separation station (16) to separate sheet metals (30) into OK and NG products based on OK/NG information of the sheet metals (30) inspected by a sheet metal inspection device installed in the sheet metal transfer path hitherto. Thus, a film cartridge plate manufacturing method and apparatus which is small, low-cost, of a simple mechanism and easy to maintain are provided.

## Description

### BACKGROUND OF THE INVENTION

### Field of the Invention

The present invention relates to a method and apparatus for manufacturing film cartridge plates, which house a photographic roll film. More specifically, the present invention relates to a method and apparatus for supplying sheet metals cut in such a way that its length and width are the same as exploded length and width of the film cartridge plate and obtaining cartridge plates of quasi-boat-shaped cross section having velvet ribbons at both ends.

### Description of the Related Art

A film cartridge that houses a photographic roll film is constructed of a cylindrical cartridge plate, a spool housed inside this cartridge plate, the photographic roll film and caps that close openings at both ends of the cartridge plate. Furthermore, a light shielding velvet ribbon is adhered to the inner surface of the film outlet of the cartridge plate.

A film cartridge plate is manufactured by processing a sheet metal cut in such a way that its length and width are the same as exploded length and width of the film cartridge plate into a shape of quasi-boat-shaped cross section and then adhering the velvet ribbon to the both ends of the quasi-boat-shaped sheet metal. In this case, a plurality of sheet metals are aligned with the front end of one sheet metal placed close to the back end of another sheet metal and transferred consecutively and at the same time two long adhesive-backed velvet ribbons are adhered to the both ends of the sheet metals consecutively. Then, the velvet ribbon between the neighboring sheet metals is cut by a cutter. The film cartridge plate is manufactured in this way.

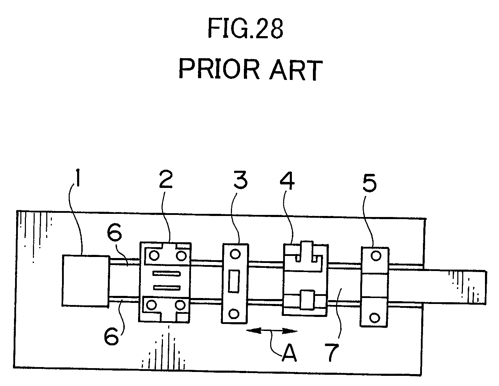

Japanese Patent Publication No. 5-53257 discloses a film cartridge plate manufacturing apparatus shown in Fig. 28, which is constructed of a sheet supply station 1, a corner cutting station 2, a small diameter bending station 3, an acute-angle bending station 4, a both ends bending station 5, sheet transfer rails 6, 6 laid below the stations 1 to 5 for inter-connecting the stations 1 to 5 and a feeding lever 7 that moves back and forth intermittently on these rails 6, 6 in the direction indicated by an arrow A in Fig. 28.

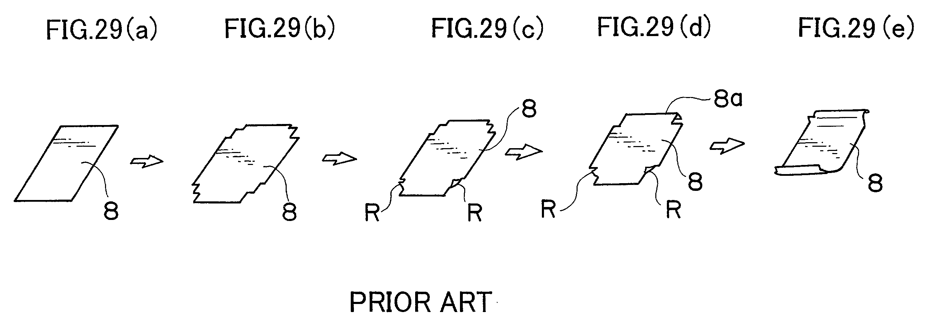

The sheet supply station 1 houses many sheet metals 8 shown in Fig. 29(a) having the same length and width as exploded length and width of the film cartridge plate. The sheet metals 8 are transferred one sheet at a time from the sheet supply station 1 to the corner cutting station 2 by an intermittent movement of the feeding lever 7 in Fig. 28. The corner cutting station 2 cuts the four corners of the sheet metal 8 into a predetermined shape as shown in Fig. 29(b). Then, the sheet metal 8 is transferred from the corner cutting station 2 to the small diameter bending station 3 and the small diameter bending station 3 applies press forming to small diameter bent sections R, R in two corners of one end of the sheet metal 8 as shown in Fig. 29(c). These bent sections are intended to facilitate bending of the sheet metals 8 into a cylindrical form and mating of a cap of the cartridge plate.

Then, the sheet metal 8 is transferred to the acute-angle bending station 4, where an acutely-angled section 8a is press-molded at the other end of the sheet metal 8 as shown in Fig. 29(d). Then, the sheet metal 8 is transferred to the both ends bending station 5, where both the ends of the sheet metal 8 are bent at a predetermined curvature as shown in Fig. 29(e) and molded into a shape of quasi-boat-shaped cross section. The film cartridge plate is manufactured in such a procedure.

On the other hand, the acute-angle bending station 4 has a single head, on which formed are a first processing face, which bends the other end of the sheet metal 8 by 90 degrees, and a second processing face, which bends the other end bent 90 degrees by the first processing face into an acutely-angled form, thus bending the acutely-angled section.

The head is operated by a groove cam having deformed sine cam curves, so as to bend the end of the sheet metal 8 by 90 degrees with the first processing face and to then bend the acutely-angled section with the second processing face.

As described above, velvet ribbons are adhered to the both ends of the film cartridge plate manufactured in this way.

Japanese Patent Publication No. 6-86268 discloses the ribbon adhering apparatus for the film cartridge plate, which is provided with a transfer device which transfers a plurality of sheet metals consecutively with the front end and back end placed close to each other, that is, the right ends or left ends placed side by side forming one line, and a crimping device which presses two long adhesive-backed velvet ribbons against the both ends of the sheet metal being transferred. After the velvet ribbons are adhered consecutively along the right end and left end of the sheet metals, the long velvet ribbons adhered thereto are cut for each sheet metal.

Furthermore, this adhering apparatus makes a plurality of cutter units at the both ends of sheet metals to which velvet ribbons are adhered circulate by means of an endless chain, so as to move synchronously in the same direction as the transfer direction of the sheet metals swings the cutters of the synchronously moving cutter unit in such a way as to insert the cutters between the front end and back end of each sheet metal and cuts the velvet ribbons. This separates a plurality of sheet metals concatenated by the velvet ribbons.

After this, the separated film cartridge plates are formed into a quasi-cylindrical shape so that both ends of the velvet ribbons overlap with each other, and a cap is crimped onto one opening end to make a cartridge with one end left open. Then, a film roll consisting of a fixed-length film wound around a spool is inserted and finally a cap is crimped onto the other opening end of the cartridge with one end left open. This completes a cartridge that houses a photographic roll film.

In the above-described cartridge manufacturing process, the velvet ribbon adhering step differs in the operating speed from the cartridge assembling step, and therefore after the velvet ribbons are adhered to the film cartridge plates, the film cartridge plates are stored in a housing case once. Furthermore, when the film cartridge plates are stored in the housing cases, OK products and NG products are separated by a separation apparatus so that OK products are dropped into an OK product housing case and NG products are dropped into an NG product housing case for storage.

As the conventional storage apparatus, the one disclosed in Japanese Patent No. 3109777 is constructed, as shown in Fig. 30, of a spider arm conveyor 400 and four sets of housing cases 404, 406, 408 and 410 that house film cartridge plates 402. The spider arm conveyor 400 is constructed of a track-shaped conveyor main body 414 made up of a pair of rectilinear sections 412a and 412b and a pair of non-rectilinear sections 412c and 412d, and a plurality of arms 416 driven by this conveyor main body 414 and running around the perimeter of the conveyor main body. The arms 416 are each provided with a magnet (not shown) to attract the film cartridge plate 402 with a light shielding ribbon 418 face up.

Along the rectilinear sections 412a side of the conveyor main body 414, a bucket conveyor 420 is provided. This bucket conveyor 420 carries the lying film cartridge plates 402 with the plane to which the light shielding ribbon 418 is adhered face up. Along the rectilinear sections 412b side of the conveyor main body 414, housing cases 404 to 408 are placed at predetermined intervals. Of the four housing cases 404 to 410, the three housing cases 404 to 408 placed upstream house OK products and the remaining one housing case 410 placed downstream houses NG products.

The housing cases 404 to 410 are oblong boxes made up of, for example, TEFLON® coated horseshoe-shaped aluminum side plates and flat plates. On the top face of the horseshoe-shaped side plate on the upstream side, a notch is formed which allows the arms 416 running at a low level to pass. Furthermore, the side plate on the upstream side is formed one step lower than the flat side plate on the downstream side.

For this reason, even if the arm 416 runs at a low level, the film cartridge plate 402 held by the arm 416 can approach the housing cases 404 to 410 without colliding with the side plate. Then, when the arm 416 goes out of the housing cases 404 to 410, the film cartridge plate 402 collides with the side plate and separates from the magnet. On the other hand, when the arms 416 run at a high level, the film cartridge plates 402 do not collide with any side plate. The housing cases 404 to 410 are each provided with a bottom plate in such a way as to be freely movable in the vertical direction. The side plate is provided with a magnet and this magnet attracts the film cartridge plates 402 via the side plate and keeps the film cartridge plates 402 piled at predetermined intervals and leveled.

The spider arm conveyor 400 allows the arms 416 to run in the direction indicated by an arrow. The arms 416 descend while passing the center of the rectilinear section 412a, attracts and holds the film cartridge plates 402 being carried by the bucket conveyor 420 by means of the magnet.

Every time the separated film cartridge plates 402 are piled in the housing cases 404 to 410, the bottom plate is lowered by a lifting apparatus, and therefore all the film cartridge plates 402 gradually slip down. Thus, every time the arms 416 pass the position of the housing case 404, the film cartridge plates 402 are piled in the housing case 404. Then, when the housing case 404 becomes full, the lifting apparatus sends a signal to a movement control section. This causes the movement control section to shift the changeover rails at the position of the housing case 404 to the position where the arms 416 run at a high level and at the same time shift the changeover rail at the position of the housing case 406 to the position where the arms 416 run at a low level. This allows the film cartridge plates 402 held by the arms 416 to be housed in the housing case 406 sequentially.

On the other hand, the storage apparatus described in Japanese Patent No. 2829764 will be explained. The boat-shaped film cartridge plates ejected from the velvet ribbon adhering machine into the chute are carried by the belt conveyor in a horizontal position once and are attracted toward the magnet pulley located downstream quasi-straightly. A magnet is embedded in the outer perimeter, etc. of this magnet pulley and therefore, the boat-shaped film cartridge plates move in an upright position as the magnet pulley rotates. A magnet is fixed below the belt looped over the magnet pulley and belts are also provided on both sides of the boat-shaped film cartridge plates. Therefore, the boat-shaped film cartridge plates separated from the magnet pulley are sent sandwiched between the belts on both sides, and move forward without changing their upright position and are piled one atop another sequentially. By the way, the boat-shaped film cartridge plates are stored with their folded sides closely contacting the belt and therefore they are piled correctly.

Furthermore, the storage apparatus disclosed in Japanese Patent No. 2785151 is provided with a stock device which stocks the boat-shaped film cartridge plates to which a velvet ribbon is adhered between an adhering device which adheres a velvet ribbon to the boat-shaped film cartridge plates and a film cartridge plate constructing device which constructs the film cartridge plates by rolling the boat-shaped film cartridge plates to which a velvet ribbon is adhered.

The boat-shaped film cartridge plates ejected from the velvet ribbon adhering machine into the chute are carried in a horizontal state by the belt conveyor and attracted by the magnet pulley located downstream in quasi-straightly. Since a magnet is embedded in the outer perimeter, etc. of this magnet pulley, the boat-shaped film cartridge plates move in an upright position as the magnet pulley rotates. The magnet is fixed below the belt looped over the magnet pulley and the belt is also provided on both sides of the boat-shaped film cartridge plates. Thus, the boat-shaped film cartridge plates separated from the magnet pulley are sent sandwiched between the belts on both sides, and therefore they are carried forward without changing their upright posture. Since magnets are also embedded in the outer perimeter and boat-shaped folded part side flange of the magnet pulley downstream of the belt, the boat-shaped film cartridge plates move from an upright position to a horizontal position as the magnet pulley rotates and are piled up vertically. The piled boat-shaped film cartridge plates are picked up from the bottom one by one by a suction cup and sent by a carrier to the next step, which is a rolling step. The boat-shaped film cartridge plates are packed from the work presence detection sensor near the magnet pulley downstream of the belt to the pickup section by the suction cup, but the boat-shaped film cartridge plates are continuously piled on the belt even when the next rolling step stops and the velvet ribbon adhering machine does not stop until the belt becomes full but continues operating.

However, despite a large number of film cartridge plates manufactured per unit time, the conventional film cartridge plate manufacturing method and apparatus have a disadvantage of expanding the size of equipment and complicating the mechanism.

For this reason, the conventional apparatus is not only expensive but also requires greater load of maintenance to keep the equipment in a good condition. It also has a problem of increasing the number of nonstandardized (NG) products produced in a transient state at the time of startup or termination.

On the other hand, the demand for photographic films is drastically increasing also in developing countries in recent years and the market is expanding worldwide. Demands from the market are also diversifying in developed countries. In line with this trend, mass production of conventional limited types of products can no longer keep up with the demands and there is a need for multiple type and small lot production in places near the market.

Therefore, although the number of products manufactured per unit time may be small, there is a demand for a manufacturing method and apparatus, which is small in size, low-cost, of a simple mechanism and with easy maintenance. However, the conventional apparatus and manufacturing method cannot meet this demand sufficiently for the above-described reasons.

Furthermore, the conventional manufacturing apparatus segmentizes the step of bending sheets, which increases the number of stations, widens the installation area and thereby requires an expensive mechanism to achieve high-speed large volume production.

On the other hand, the aforementioned publicly known film cartridge plate storage method and apparatus become large-sized and complicated, which require a greater installation area and use a more complicated mechanism. This is obvious from the storage apparatus in Japanese Patent No. 2829764. Moreover, the storage apparatus disclosed in Japanese Patent No. 2785151, which directly connects to a post-process, also requires a long buffer. Moreover, the storage apparatus disclosed in Japanese Patent No. 3109777 requires a large, complicated unloading mechanism. This not only increases costs but also increases maintenance load to keep the equipment in a good condition.

There have been demands for a storage apparatus, which is small, low-cost, of a simple mechanism and with easy maintenance, but these demands have not been sufficiently satisfied for the above-described reasons.

Furthermore, since the aforementioned conventional film cartridge plate manufacturing apparatus uses a groove cam, which is difficult to design and manufacture, it has a disadvantage that the equipment is expensive. That is, since the conventional groove cam carries out 90-degree bending processing step and acute-angle bending step with a single groove cam, which makes the shape of the cam groove complicated and makes manufacturing difficult.

Furthermore, the conventional film cartridge plate separation apparatus constitutes a spider arm conveyor made up of a plurality of moving arms, which give disadvantages of increasing the size of the apparatus and making the structure complicated as well.

Moreover, the conventional film cartridge plate manufacturing apparatus includes the sheet supply station 1, corner cutting station 2, small diameter bending station 3, acute-angle bending station 4 and both ends bending station 5 placed in parallel independently of one another in the transfer direction of sheet metals as shown in Fig. 28, which causes disadvantages of extending the transfer line and expanding the size of the equipment.

Moreover, there is a demand for a manufacturing apparatus, which is small, low-cost, with a simple mechanism and easy maintenance despite a small number of products manufactured per unit time in recent years. The ribbon adhering apparatus described in aforementioned Japanese Patent Publication No. 6-86268 has a structure whereby a plurality of cutter units circulate using an endless chain so as to move synchronously in the same direction as that of sheet metals, and therefore it takes more space and expands the size, becomes more complicated and expensive, failing to meet the aforementioned demand.

### SUMMARY OF THE INVENTION

The present invention has been achieved in view of such circumstances and it is an object of the present invention to provide a film cartridge plate manufacturing method and apparatus, which is small, low-cost, of a simple mechanism and with easy maintenance.

In order to attain the above-described object, the present invention is directed to a film cartridge plate manufacturing method, comprising the steps of: sequentially transferring sheet metals cut in such a way that their length and width are the same as exploded length and width of a film cartridge plate from a sheet supply station by a transfer device; cutting four corners of the sheet metals into a predetermined shape by a corner cutting station placed in a transfer path of the transfer device; positioning and fixing the sheet metals by a small diameter bending station/acute-angle bending station placed downstream of the transfer path of the corner cutting station and then bending a small diameter bent section in two corners at one end of the sheet metal and an acutely-angled section at the other end of the sheet metal simultaneously; bending the sheet metals into a predetermined shape of quasi-boat-shaped cross section by a both ends bending station placed downstream of the transfer path of the small diameter bending station/acute-angle bending station; adhering velvet ribbons to both ends of the sheet metals by a ribbon adhering station placed downstream of the transfer path of the both ends bending station; and separating the sheet metals into OK products and NG products by a separation station placed downstream in the transfer direction of the ribbon adhering station based on OK/NG information of the sheet metals inspected by a sheet metal inspection device placed in the sheet metal transfer path hitherto.

Furthermore, in order to attain the above-described object, the present invention is directed to a film cartridge plate manufacturing apparatus, comprising: a sheet supply station which stores sheet metals having the same length and width as exploded length and width of a film cartridge plate; a transfer device which sequentially picks up the sheet metals from the sheet supply station and transfers the sheet metals; a corner cutting station which is placed in the transfer path by the transfer section and provided with a cutting section which cuts four corners of the sheet metal into a predetermined shape; a small diameter bending station/acute-angle bending station which is placed downstream of the transfer path of the corner cutting station and provided with a holding section which positions and fixes the sheet metals, a small diameter bending station which bends a small diameter bent section in two corners at one end of the sheet metal positioned and fixed by the holding section and an acute-angle bending station which bends an acutely-angled section at the other end of the sheet metal simultaneously with the bending by the small diameter bending station; a both ends bending station which is placed downstream of the transfer path of the small diameter bending station/acute-angle bending station and provided with a processing section which bends the sheet metal into a predetermined shape of quasi-boat-shaped cross section; a ribbon adhering station which is placed downstream of the transfer path of the both ends bending station and adheres velvet ribbons to both ends of the sheet metals; and a separation station which is placed downstream of the transfer path of the ribbon adhering station and separates the sheet metals into OK products and NG products based on OK/NG information of the sheet metals inspected by a sheet metal inspection device placed in the sheet metal transfer path hitherto.

In order to attain the above-described object, the present invention provides a film cartridge plate storage apparatus that stores quasi-boat-shaped film cartridge plates transferred by a transfer device in a chute, wherein the chute is placed inclined a predetermined angle, the film cartridge plates are put into the chute with the acutely-angled section formed at the end in the lead, and when the acutely-angled section of an inserted film cartridge plate collides with another film cartridge plate which has already been stored and laid down, the lying film cartridge plate stands up by a pushing force of the collision and is stored in the chute in an upright position with the acutely-angled side down.

The present invention stores the finished boat-shaped film cartridge plates in a chute which is inclined 20° to 45°, more preferably 30° to 35°, with the acutely-angled section in the lead and lets them slip down so that the boat-shaped film cartridge plates are stored uniformly aligned in the same direction in an upright position with the acutely-angled side down.

In this way, it is possible to provide a film cartridge plate storage station capable of storing film cartridge plates in a simple mechanical configuration. Furthermore, adding simple incidental equipment to this storage apparatus makes it possible to meet requirements for a wide range of processing speed and the number of products manufactured per unit time.

An example of this incidental equipment is to provide a kicking belt conveyor that increases the initial speed of putting cartridge plates into a chute in order to increase the processing speed.

Another example of incidental equipment is to provide a chute top popup prevention member for preventing a cartridge plate from slipping down, colliding with the preceding cartridge plate and standing up too quickly, which would cause the cartridge plate to pop up.

A further example of incidental equipment is automatic equipment that automatically picks up a certain number of cartridge plates stored in the chute in an upright position and houses them in a tray for sending them to a downstream step and is constructed of a storage belt conveyor, a separation stopper and a reciprocating movable stopper. These incidental equipment units are intended to improve the processing performance and what should be provided is only a basic and inclined chute up to certain throughput.

In order to attain the above-described object, the present invention provides a cartridge plate manufacturing apparatus including a sheet supply station which stores sheet metals having the same length and width as exploded length and width of a film cartridge plate, a transfer device which sequentially extracts the sheet metals from the sheet supply station and transfers the sheet metals, a corner cutting station which is placed in a transfer path of the transfer device and provided with a processing section which cuts the four corners of the sheet metals into a predetermined shape, a small diameter bending station provided with a processing section which processes a small diameter bent section in two corners at one end of the sheet metals, an acute-angle bending station provided with a processing section which processes an acutely-angled section at the other end of the sheet metals and a processing station made up of a both ends bending station provided with a processing section which bends the sheet metals into a predetermined shape of quasi-boat-shaped cross section, wherein the processing section of the acute-angle bending station includes a first processing section which bends the other end of the sheet metal 90 degrees and a second processing section which bends the other end bent 90 degrees by the first processing section into an acutely-angled form to bend the acutely-angled section, and the first processing section and the second processing section are each attached to a rotation axis which rotates by torque of a driving motor via their respective eccentric cam members and driven by eccentric rotational operations of these eccentric cam members.

The present invention divides the processing section of the acute-angle bending station into a first processing section which bends one end of the sheet metal 90 degrees and a second processing section which bends the one end bent 90 degrees by the first processing section into an acutely-angled form to bend the acutely-angled section, attaches the first processing section and the second processing section to a rotation axis which rotates by torque of a driving motor via the respective eccentric cam members and drives them by eccentric rotational operations of these eccentric cam members.

Thus, the present invention uses eccentric cam members instead of the conventionally used groove cams with a deformed sine cam curve and thereby provides a simple structure and simplifies the equipment.

Furthermore, the present invention attaches processing sections such as the corner cutting station, the small diameter bending station and the both ends bending station to a rotation axis which rotates by torque of a driving motor via the respective eccentric cam members and drives them by eccentric rotational operations of these eccentric cam members.

In order to attain the above-described object, the present invention provides a separation apparatus that separates film cartridge plates transferred by a transfer device into OK products and NG products based on OK/NG information, characterized by comprising a belt conveyor placed downstream of the transfer device, a plurality of attraction devices which are placed and fixed in the circulation direction of the belt conveyor at predetermined intervals and attract the film cartridge plates transferred to the downstream of the transfer device via the belt of the belt conveyor, a film cartridge plate storage section made up of an OK product storage section and an NG product storage section placed in the lower part of the belt conveyor and a control device which controls ON/OFF of the attraction power of the attraction device located above the film cartridge plate storage section out of the plurality of attraction devices based on the OK and NG product information.

An embodiment of the present invention is characterized by adopting a separation apparatus with a small and simple structure made up of a plurality of attraction devices fixed and placed in the circulation direction of the belt conveyor. According to this separation apparatus, the film cartridge plates are attracted by the attraction device located upstream of the belt conveyor through the belt of the belt conveyor, attracted from the upstream attraction device to the neighboring attraction device by the circulating motion of the belt conveyor, and when these attraction and movement operations are repeated from the upstream attraction device to the downstream attraction device, the film cartridge plates are transferred in the circulation direction of the belt conveyor. Then, when OK and NG products are separated, the control device controls ON/OFF of the attraction device located above the film cartridge plate storage section out of the plurality of attraction devices based on the OK and NG product information. One of the separation methods is the method which turns OFF the attraction device when the film cartridge plate is an NG product and drops the film cartridge plate into the NG product storage section and stores the film cartridge plate therein. Another method is to turn OFF the attraction device when the film cartridge plate is an OK product and drop the film cartridge plate into the OK product storage section and store the film cartridge plate therein. That is, it is possible to separate film cartridge plates into OK and NG products through simple control only performing OFF control of the attraction device.

An embodiment of the present invention is characterized in that the OK product storage section of the film cartridge plate storage section is placed below the position separate toward the downstream side in the transfer direction by a predetermined distance from the attraction device located most downstream. When the OK product storage section is placed below such a separate position, OK film cartridge plates transferred to the separate position drop from the belt conveyor to the OK product storage section due to a reduction of attraction of the attraction device. This makes it possible to store OK film cartridge plates in the OK product storage section without controlling ON/OFF of the attraction device.

An embodiment of the present invention uses a magnet as the attraction device. Furthermore, an electromagnet is used as the magnet located above the film cartridge plate storage section and the control device controls ON/OFF of this electromagnet.

The film cartridge plate manufacturing method of the present invention is characterized by comprising the steps of sequentially transferring sheet metals cut in such a way that their length and width are the same as exploded length and width of a film cartridge plate from a sheet supply station by a transfer device, cutting the four corners of the sheet metals into a predetermined shape by a corner cutting station placed in a transfer path of the transfer device, positioning and fixing the sheet metals by a small diameter bending station/acute-angle bending station placed downstream of the transfer path of the corner cutting station and then bending a small diameter bent section in two corners at one end of the sheet metals and an acutely-angled section at the other end of the sheet metals simultaneously and bending the sheet metals into a predetermined shape of quasi-boat-shaped cross section by a both ends bending station placed downstream of the transfer path of the small diameter bending station/acute-angle bending station.

Furthermore, in order to attain the above-described object, the film cartridge plate manufacturing apparatus of the present invention is characterized by comprising a sheet supply station which stores sheet metals having the same length and width as exploded length and width of a film cartridge plate, a transfer device which sequentially extracts the sheet metals from the sheet supply station and transfers the sheet metals, a corner cutting station which is placed in the transfer path by the transfer device and provided with a cutting section which cuts the four corners of the sheet metals into a predetermined shape, a small diameter bending station/acute-angle bending station which is placed downstream of the transfer path of the corner cutting station and provided with a holding section which positions and fixes the sheet metals, a small diameter bending station which bends a small diameter bent section in two corners at one end of the sheet metal positioned and fixed by the holding section and an acute-angle bending station which bends an acutely-angled section at the other end of the sheet metal simultaneously with the bending by the small diameter bending station and a both ends bending station which is placed downstream of the transfer path of the small diameter bending station/acute-angle bending station and provided with a processing section which bends the sheet metals into a predetermined shape of quasi-boat-shaped cross section.

The present invention has attained miniaturization of equipment focusing attention on the fact that it is possible to integrate a small diameter bending station and acute-angle bending station, which have been conventionally placed independently of each other. That is, the small diameter bending station is a station that processes one end of the sheet metal with the sheet metal positioned and the acute-angle bending station is a station that processes the other end of the sheet metal with the sheet metal positioned. In short, although the small diameter bending station and acute-angle bending station are integrated, the respective stations process different parts of the sheet metal, and therefore the apparatuses of the respective stations do not interfere with each other and there is no problem with integration. Moreover, small diameter bending and acute-angle bending are performed simultaneously with one-time positioning, which improves the processing accuracy, too.

On the other hand, the comer cutting station is a station that cuts the four comers of the sheet metals into a predetermined shape and therefore it is difficult to integrate it with the small diameter bending station which is the next station because the apparatuses interfere with each other. The both ends bending station is a station that bends both ends of the sheet metals, and therefore it is also difficult to integrate the both ends bending station and acute-angle bending station because the apparatuses interfere with each other.

Thus, according to the present invention that integrates the small diameter bending station and the acute-angle bending station, it is possible not only to reduce the size of equipment but also to carry out small diameter bending and acute-angle bending simultaneously through one-time positioning, which improves both the processing accuracy and production efficiency.

In order to attain the above-described object, the present invention provides a ribbon adhering apparatus which adheres velvet ribbons at the both ends of a sheet metal which becomes a film cartridge plate, characterized by including a transfer device which arranges a plurality of sheet metals with the front end of one sheet metal placed close to the back end of another sheet metal and transfers the sheet metals consecutively, a crimping device which presses two long adhesive-backed velvet ribbons against the both ends of the sheet metals being transferred and adheres the velvet ribbons consecutively, a pair of cutter units whose head section is placed in such a way as to be movable back and forth along the both ends of the sheet metals to which the velvet ribbons are adhered and provided with a plurality of cutters at predetermined intervals, a cutter unit moving device which moves each head section of the pair of cutter units synchronously in the same direction as the transfer direction of the sheet metals to which the velvet ribbons are adhered, swings each synchronously moving head section in the direction perpendicular to the moving direction, inserts the plurality of cutters into a gap between the front end and back end of the adjacent sheet metals and thereby allows the plurality of cutters to cut the velvet ribbons simultaneously.

An embodiment of the present invention provides a transfer device which arranges a plurality of sheet metals with the front end of one sheet metal placed close to the back end of another sheet metal, that is, the right ends and left ends forming one straight line respectively, and transfers the sheet metals consecutively, a crimping device which presses two long adhesive-backed velvet ribbons against the both ends of the sheet metals being transferred and adheres the velvet ribbons consecutively along the right end and left end of the sheet metal, moves a head section of a pair of cutter units back and forth linearly, cuts the long velvet ribbons adhered and separates the sheet metals. That is, the head section of the cutter unit moves synchronously in the same direction as the transfer direction of the sheet metals to which the velvet ribbons are adhered and at the same time swings in the direction perpendicular to the moving direction. In this way, a plurality of cutters are inserted into a gap between the front end and back end of the adjacent sheet metals and thereby the plurality of cutters cut the velvet ribbons simultaneously. After this, the head section moves linearly to the home position and repeats the aforementioned cutting operation. Thus, the present invention adopts a structure of moving the head section of the cutter unit linearly back and forth, not a structure of circulating the cutter unit with an endless chain, and can thereby provide a smaller and simpler structure than the conventional ribbon adhering apparatus.

An embodiment of the present invention is characterized in that the cutter unit is provided with a displacement prevention member which presses the sheet metals transferred by the transfer device against the conveyor of the transfer device immediately before the cutters cut the velvet ribbons to prevent any displacement from the conveyor. This prevents the problem of the cutters colliding with the sheet metals and ensures that the velvet ribbons are cut accurately and securely.

An embodiment of the present invention is characterized in that the cutter unit is provided with a positioning member which positions the head section for the conveyor of the transfer device immediately before the cutters cut the velvet ribbons. This allows the sheet metals being transferred by the conveyor and the cutters to be positioned, which makes it possible to cut the velvet ribbons accurately and securely.

### BRIEF DESCRIPTION OF THE DRAWINGS

The nature of this invention, as well as other objects and advantages thereof, will be explained in the following with reference to the accompanying drawings, in which like reference characters designate the same or similar parts throughout the figures and wherein:
Fig. 1 is a plan view of a film cartridge plate manufacturing apparatus according to an embodiment;
Fig. 2 is a front view of the film cartridge plate manufacturing apparatus shown in Fig. 1;
Fig. 3 is a right side view of the film cartridge plate manufacturing apparatus shown in Fig. 2;
Fig. 4 is a cross-sectional view of a both ends bending station;
Fig. 5 is a cross-sectional view of key components of a feeding bar;
Fig. 6 is a structural diagram showing a power transmission mechanism of a forming apparatus;
Fig. 7 is the structural diagram showing the power transmission mechanism of the forming apparatus;
Fig. 8 is a structural diagram of a connection between the feeding bar and bucket conveyor;
Figs. 9(a) to 9(d) illustrate a sheet metal processing step;
Fig. 10 is a perspective view of a cartridge;
Fig. 11 is an enlarged view of key components showing a velvet ribbon adhered section;
Figs. 12(a) to 12(c) illustrates a structure of an OK chute;
Fig. 13 is a structural diagram of a power transmission mechanism including an AC servo motor;
Fig. 14 is a structural diagram of a power transmission mechanism including an AC servo motor;
Fig. 15 is a structural diagram of a small diameter bending station/acute-angle bending station;
Fig. 16 is a structural diagram of a small diameter bending station;
Fig. 17 is a structural diagram of a work holding arm;
Fig. 18 is a structural diagram of a 90-degree folding arm;
Fig. 19 is a structural diagram of an angling arm;
Fig. 20 is a perspective view of key components showing a positional relationship between the 90-degree folding arm and angling arm;
Figs. 21(a) to 21(c) illustrate an operation of the small diameter bending station/acute-angle bending station;
Fig. 22 is a schematic view of a power transmission mechanism that transmits power to the cutter unit;
Fig. 23 is a side view of the cutter unit of the embodiment;
Fig. 24 is a perspective view of the cutter unit shown in Fig. 23;
Fig. 25 is a structural diagram of a separation apparatus of the embodiment;
Fig. 26 is a plan view of the OK chute of the embodiment;
Fig. 27 is a side view of the OK chute shown in Fig. 26;
Fig. 28 is a plan view showing a conventional film cartridge plate manufacturing apparatus;
Figs. 29(a) to 29(e) illustrate a procedure for manufacturing film cartridge plates using the conventional film cartridge plate manufacturing apparatus; and

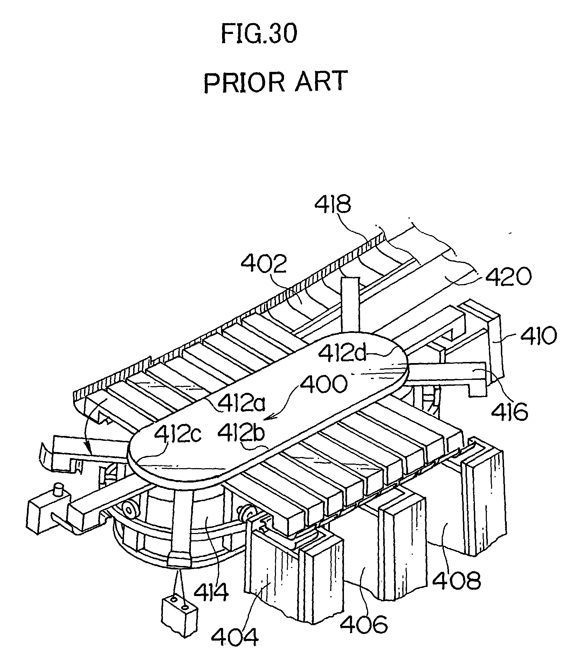

Fig. 30 is a perspective view of a conventional storage apparatus.

### DETAILED DESCRIPTION OF THE PREFERRED EMBODIMENTS

With reference now to the attached drawings, embodiments of a film cartridge plate manufacturing method and the apparatus thereof will be explained in detail below.

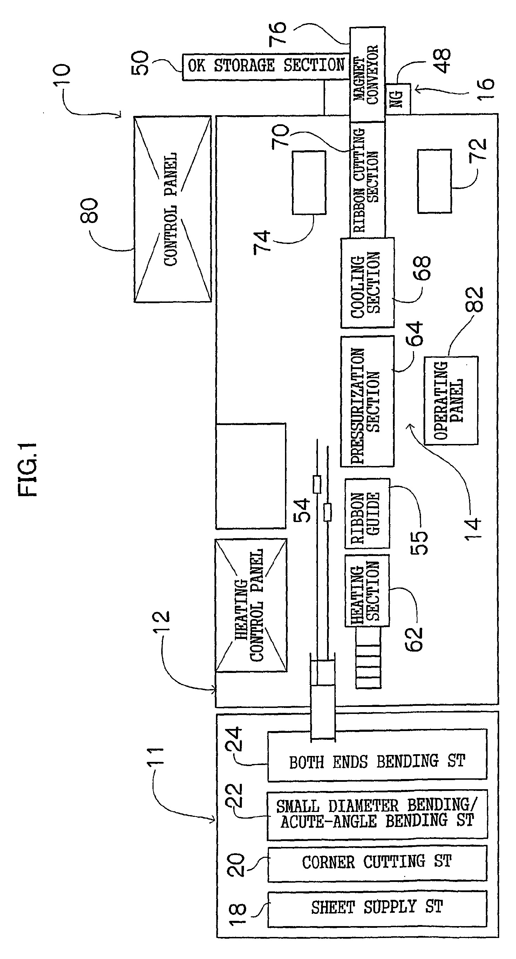

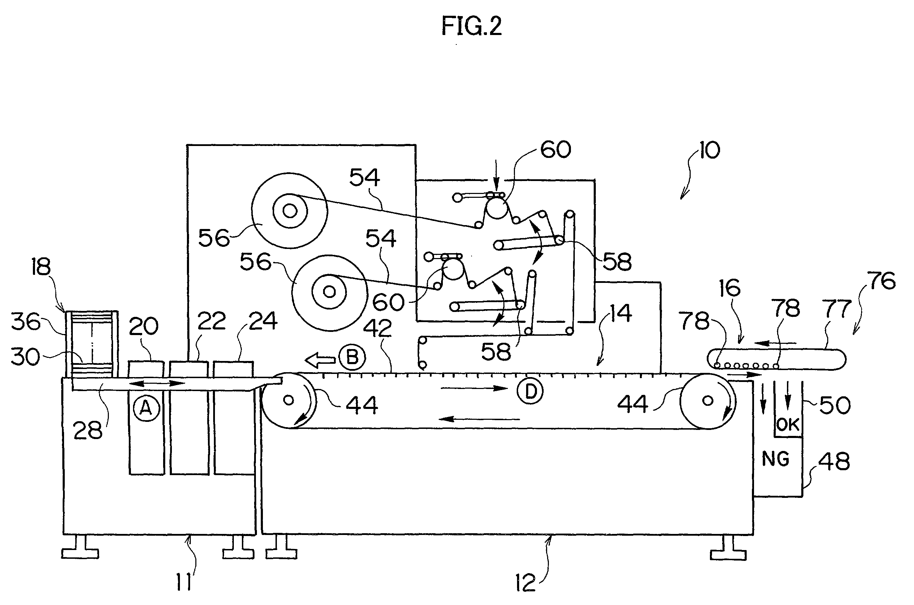

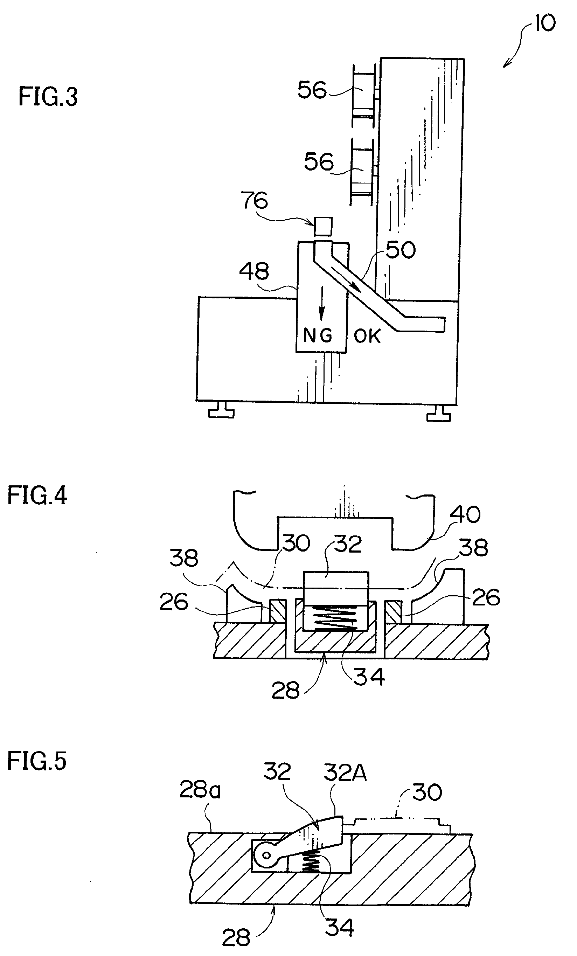

Fig. 1 is an outlined plan view of a film cartridge plate manufacturing apparatus 10, Fig. 2 is an outlined front view of the manufacturing apparatus 10 shown in Fig. 1, and Fig. 3 is an outlined right side view of the manufacturing apparatus 10 shown in Fig. 2. This manufacturing apparatus 10 is constructed of a first stage processing section 11 that performs cutting and bending processing of sheet metals and a second stage processing section 12 provided with a velvet ribbon adhering/cutting apparatus (ribbon adhering station) 14 and an OK/NG separation storage apparatus (separation station) 16.

The first stage processing section 11 is constructed of a sheet supply station 18, a corner cutting station 20, a small diameter bending station/acute-angle bending station 22 and a both ends bending station 24. Furthermore, a pair of sheet transfer rails 26, 26 shown in Fig. 4 are laid beneath the stations 18 to 24 and a feeding bar 28 that moves back and forth intermittently in the direction indicated by an arrow A in Fig. 2 is provided between these rails 26. The sheet metals 30, which become film cartridge plates, are transferred intermittently with a predetermined feeding pitch by this feeding bar 28 and supplied to the stations 18 to 24 sequentially.

In an embodiment, the feeding pitch of the feeding bar 28 is 90 mm and the distance between the sheet supply station 18 and the corner cutting station 20 is set to 270 mm including the two intermediate stations. Furthermore, the distance between the corner cutting station 20 and the small diameter bending station/acute-angle bending station 22 is set to 180 mm including one intermediate station. Furthermore, the distance between the small diameter bending station/acute-angle bending station 22 and the both ends bending station 24 is set to 180 mm including one intermediate station. By the way, the distances among these stations are not limited to the above-described sizes. The amount of feeding pitch and the number of intermediate stations are set based on the degree of freedom of arrangement of the stations 18 to 24 and a speed that allows stable feeding of the sheet metals 30.

The feeding bar 28 is provided with a lug 32 shown in Fig. 4 and Fig. 5 and this lug 32 protrudes upward from the upper surface 28a of the feeding bar 28 by a predetermined amount pressurized by a spring 34. Furthermore, there is a plurality of lugs 32 with the same pitch as the above-described feeding pitch. More specifically, there are as many lugs 32 as all stations 18 to 24 including intermediate stations.

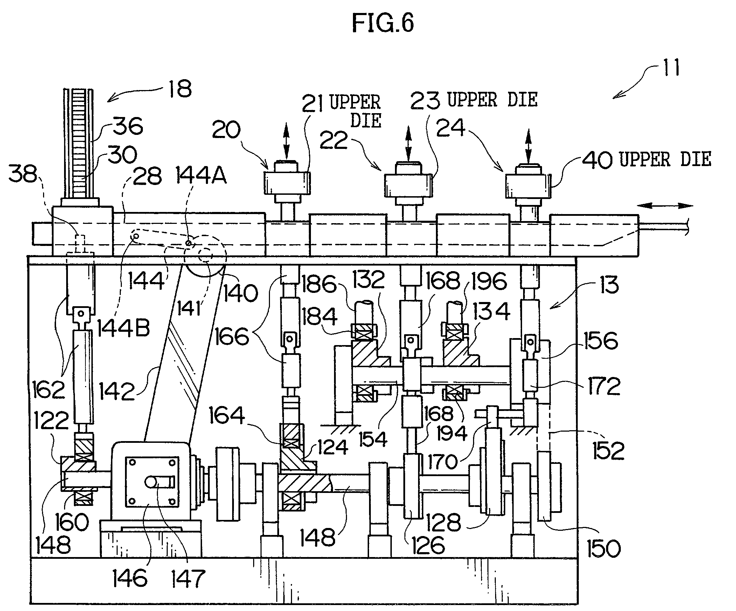

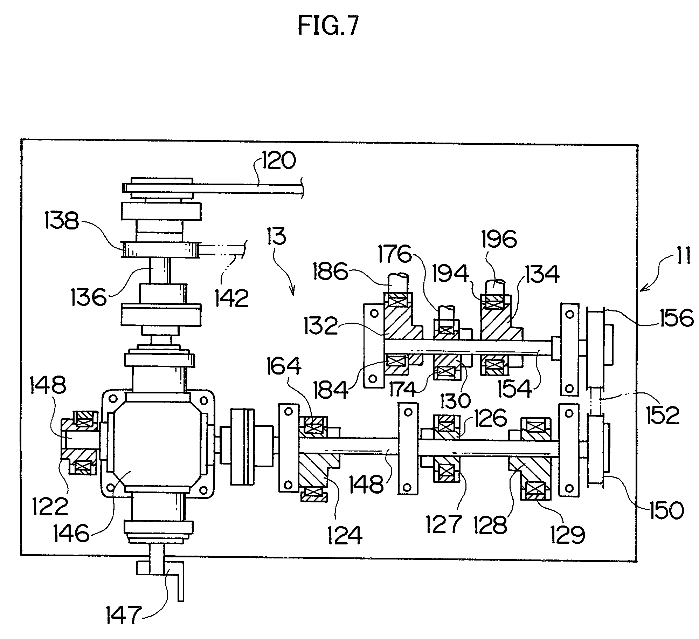

The sheet supply station 18 is provided with a rack 36 shown in Fig. 2 and many sheet metals 30, 30... are housed piled one atop another in the rack 36. These sheet metals 30, 30... are suctioned to an air suction cup 38 shown by alternate long and two short dashes line in Fig. 6 and supplied one by one to the feeding bar 28. When the sheet metals 30 are supplied, the feeding bar 28 is stopped at the leftmost position in Fig. 6 and the sheet metals 30 are supplied to the front side of the leftmost lug 32 (right side in Fig. 5). The sheet metals 30 supplied to the feeding bar 28 are rectangular and their length and width are equal to the exploded length and width of a film cartridge plate. Fig. 6 and Fig. 7 show the drive mechanism 13 of the first stage processing section 11 and this drive mechanism 13 will be explained later.

When a sheet metal 30 is supplied from the sheet supply station 18 to the feeding bar 28, the feeding bar 28 is shifted toward the front side by the mounting pitch of the lug 32. In this way, the sheet metal 30 supplied to the front of the leftmost lug 32 is pushed forward by the lug 32 on the rails 26, 26 and stopped at a predetermined position of an intermediate station. When this operation is repeated, the sheet metal 30 passes through a plurality of intermediate stations and stops at a predetermined position in the corner cutting station 20.

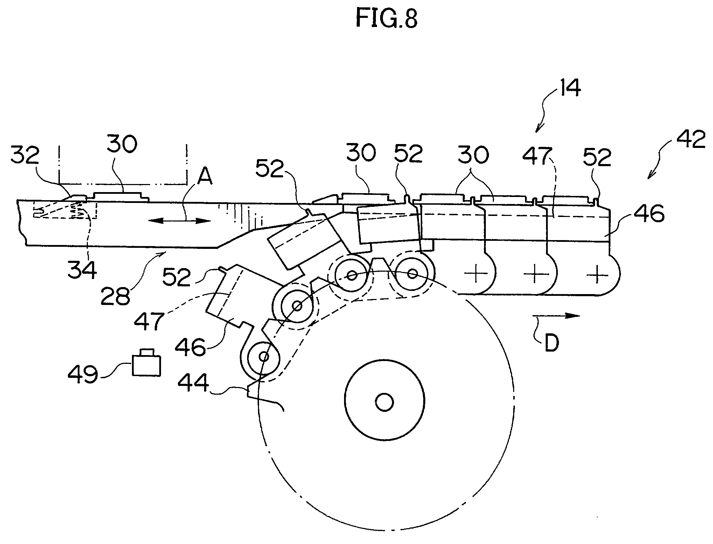

When this operation is repeated consecutively, the sheet metal 30 supplied from the sheet supply station 18 is transferred to the corner cutting station 20 and the sheet metal 30 in the corner cutting station 20 is transferred to the small diameter bending station/acute-angle bending station 22 and the sheet metal 30 in the small diameter bending station/acute-angle bending station 22 is guided by the rails 26, 26 and transferred to the both ends bending station 24. Then, the sheet metal 30 in the both ends bending station 24 is supplied to the bucket conveyor 42 of the velvet ribbon adhering/cutting apparatus 14 shown in Fig. 8.

As shown in Fig. 5, each lug 32 pressurized by the spring 34 of the feeding bar 28 has an inclined upper surface 32A. Therefore, when the feeding bar 28 returns to its home position after feeding the sheet metal 30 to the next station, that is, when the feeding bar 28 goes back to the left in Fig. 5, each lug 32 hits the bottom face of the sheet metals 30 located at the stations 18 to 24 and sinks downward when passing through the stations 18 to 24. Thus, the sheet metals 30 set in the respective stations 18 to 24 are never sent back by the returning operation of the feeding bar 28.

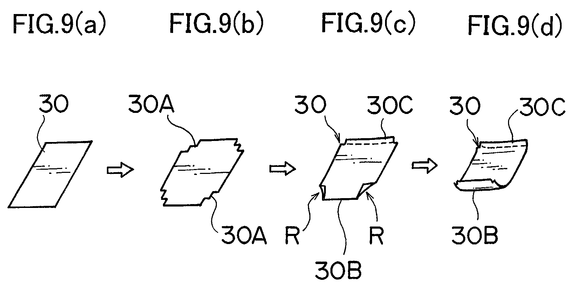

The corner cutting station 20 is a press machine made up of an upper die and lower die and modifies the sheet metal 30 into a shape with the four corners 30A cut out as shown in Fig. 9(b) by cutting the four corners of the rectangular sheet metal 30 shown in Fig. 9(a). When this corner cutting station 20 operates, the small diameter bending station/acute-angle bending station 22 and the both ends bending station 24 also operate at the same time.

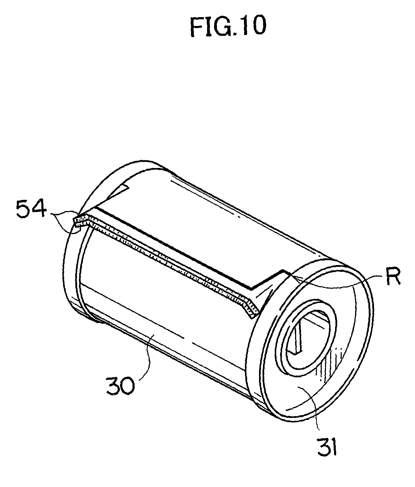

The small diameter bending station/acute-angle bending station 22 is constructed of a press machine divided into a plurality of parts. First, the small diameter bending press forms a small diameter bent section R in the two corners of one end 30B of the cut out part of the sheet metal 30 as shown in Fig. 9(c). This bent section R is intended to facilitate the mating of the cartridge cap 31 with the cylindrical sheet metal 30 at a final step of manufacturing the film cartridge plates when the sheet metal 30 is bent into a cylindrical form as shown in Fig. 10. On the other hand, the acute-angle bending press applies acute-angle bending to the other end 30C of the sheet metal 30 as shown in Fig. 9(c).

Then, both ends 30C and 30B of the sheet metal 30 are bent with a predetermined curvature by the press machine of the both ends bending station 24 as shown in Fig. 9(d). Fig. 4 shows a lower die 38 and an upper die 40 which moves in vertical direction set on the both ends bending station 24. Finally, the sheet metal 30 in the both ends bending station 24 is sent to the bucket conveyor 42 shown in Fig. 8. This is the structure of the first stage processing section 11.

Hereafter, the velvet ribbon adhering/cutting apparatus 14 of the second stage processing section 12 will be explained.

Fig. 8 shows the connection between the feeding bar 28 and the bucket conveyor (transfer device) 42. This bucket conveyor 42 is stretched between a pair of sprockets 44, 44 as shown in Fig. 2 and circulated in the direction indicated by an arrow D in Fig. 2 by the clockwise rotation of the sprockets 44, 44.

A recess section 47 is formed on the mounting surface of each bucket 46 of the bucket conveyor 42 shown in Fig. 8. The sheet metal 30 is transferred from the feeding bar 28 to the recess section 47 of the bucket 46 with the inner surface face up. At that time, a CCD camera 49 or barcode reader connected to an image recognition apparatus (forming part of the sheet metal inspection device) reads the printed content on the lower surface (outer surface) of the sheet metal 30 from underneath or diagonally underneath of the bucket conveyor 42 to check whether the printed content matches a preset type or not. When the printed content is different from the preset type, an alarm is issued to the operator and the sheet metal is ejected as an NG product on the downstream side. Moreover, an optical non-contact sensor checks the shape of the passing sheet metal 30 to check whether the sheet metal 30 is correctly molded or not. In the case of abnormality, the product is ejected as an NG product on the downstream side likewise.

In the case of abnormality, an alarm is issued to the operator and the NG sheet metal 30 is ejected into an NG chute 48 shown in Fig. 3. As an alternative, when NG products appear a predetermined number of times or more consecutively, the manufacturing apparatus 10 is stopped and the system awaits instructions of the operator. This is a measure to prevent the operating rate of the equipment from dropping and prevent NG products from being consecutively produced in large quantity as well. Reference numeral 50 in Fig. 3 denotes an OK chute to store OK products.

As shown in Fig. 8, bucket lugs 52 are provided at the right and left ends of the sheet mounting surface of each bucket 46. The feeding bar 28 transfers the sheet metal 30 which is quasi-boat-shaped as shown in Fig. 9(d) to a position where the sheet metal does not hit the bucket lug 52 of the bucket 46 and returns to its home position. This sheet metal 30 is pushed forward by the bucket lug 52 of the next bucket 46 and as a result pushed against the bucket lug 52 of the bucket 46 on which the sheet metal 30 is mounted. In this way, the sheet metals 30, 30... are mounted on the bucket conveyor 42 at small intervals regulated by the lug 52 and transferred one after another.

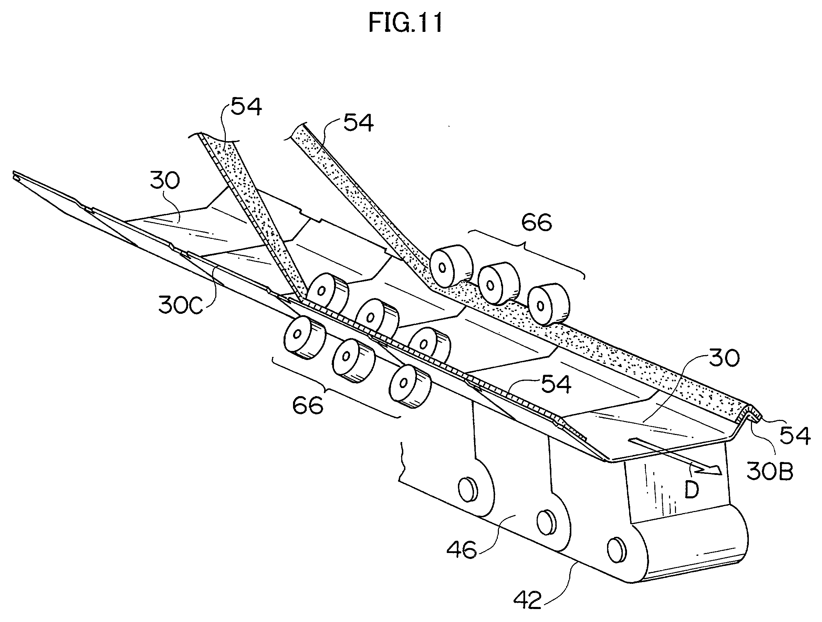

On the other hand, the two long velvet ribbons 54, 54... shown in Fig. 2 are provided with an adhesive on the back beforehand, cut into a predetermined width in a separate step, wound around reels 56, 56... and prepared on the manufacturing apparatus 10. The velvet ribbons 54, 54 wound around the reels 56, 56 are kept at predetermined tension by tension rollers 58, 58 and pulled out by the feeding rollers 60, 60. The positions in the direction perpendicular to the propagating direction of the velvet ribbons 54, 54 pulled out are regulated by flanged rollers (not shown) and flanged guides (not shown) just before the velvet ribbon adhering/cutting apparatus 14. Then, the ends of the velvet ribbons 54 are pulled out by the velvet ribbon adhering/cutting apparatus 14 in the direction shown by an arrow D in Fig. 11 and crimped over one end 30B and the other end 30C of the sheet metal 30.

By the way, immediately before the velvet ribbons 54, 54 are supplied to the velvet ribbon adhering/cutting apparatus 14, an optical device checks whether the velvet ribbons 54, 54 are upside down or not without contact, whether the velvet ribbons 54, 54 adhere to themselves and are doubled or not or whether there is an adhesive that should have been applied to the velvet ribbons 54, 54 or not.

On the other hand, the sheet metals 30 are transferred consecutively by the bucket conveyor 42 with one end (left end viewed from the downstream in the transfer direction of the sheet metals 30) 30B and the other end (right end viewed from the downstream in the transfer direction of the sheet metals 30) 30C forming one line, pass through a high frequency heating apparatus 62 installed on the upstream side of the bucket conveyor 42 shown in Fig. 1 whereby the one end 30B and the other end 30C are heated and are sent into a pressurization section 64. In the pressurization section 64, the velvet ribbons 54, 54 are placed with the adhesive-backed surface down and sandwiched between a pair of rollers 66, 66 shown in Fig. 11 and one end 30B and the other end 30C of the sheet metals 30. In this way, the velvet ribbons 54, 54 are adhered to the one end 30B and the other end 30C of the heated sheet metals 30.

Before and after the pressurization section 64, the temperature of the sheet metal 30 and the amount of protrusion of the velvet ribbons 54 from the sheet metals 30 are detected by a non-contact measuring device. As the measuring device here, a radiation thermometer and laser displacement gauge are used. When data that exceeds a preset upper or lower limit is obtained, the sheet metal 30 is decided to be an NG product and ejected into the NG chute 48 shown in Fig. 3.

In Fig. 11, the long velvet ribbons 54, 54 adhered to the sheet metals 30 move together with the sheet metals 30, 30... transferred by the bucket conveyor 42. Therefore, the sheet metals 30 which are transferred sequentially are connected by the velvet ribbons 54, 54 and sent into a cooling section 68 (see Fig. 1).

The cooling section 68 is provided with air pipes in the transfer direction of the sheet metals 30 and the air pipes have many pores. Compressed air is blown through these pores to the sheet metals 30 and velvet ribbons 54 to cool the entire sheet metals 30. Then, when cooled down to a temperature at which it is possible to cut the ribbons by the ribbon cutting section 70 in the downstream process, the sheet metals 30 are sent to the ribbon cutting section 70.

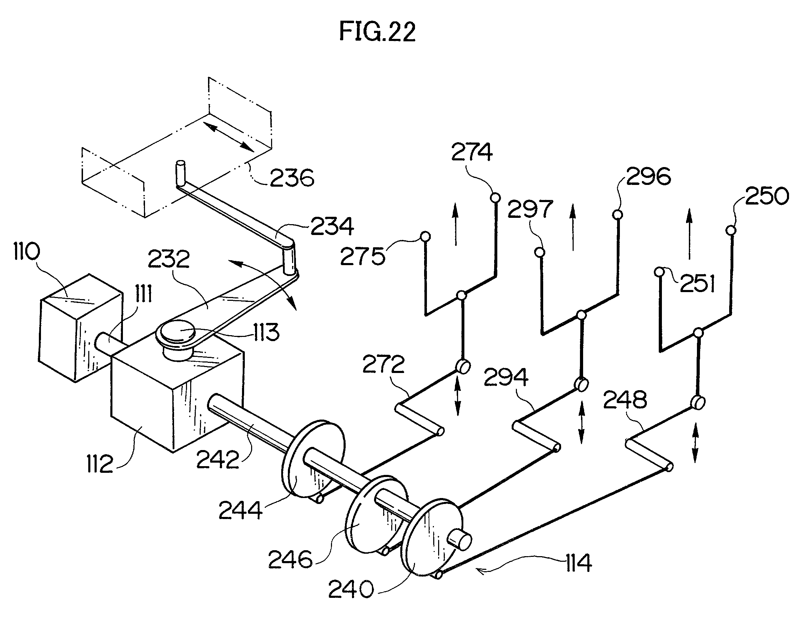

The ribbon cutting section 70 is constructed of a cutter unit 72 located on the one end 30B side of the sheet metal 30 and the cutter unit 74 placed on the other end 30C side as shown in Fig. 1. Both units 72 and 74 are provided symmetrically with respect to the transfer path of the bucket conveyor 42 and driven to cut the sheet metals 30, 30... connected by the velvet ribbons 54 into individual sheet metals 30. Then, the sheet metals 30 with the short velvet ribbons 54, 54 adhered to both ends 30B and 30C are transferred one by one from the bucket conveyor 42 to the OK/NG separation storage apparatus 16. By the way, the cutter units 72 and 74 are of the same structure. The structure of these cutter units 72 and 74 will be described later using Fig. 22 to Fig. 24.

The OK/NG separation storage apparatus 16 shown in Fig. 2 is mainly constructed of the magnet conveyor 76. The magnet conveyor 76 is constructed of a conveyor main body 77 and a plurality of electromagnets and permanent magnets 78, 78... arranged along in the circulation direction of the conveyor main body 77. The sheet metals 30 transferred by the bucket conveyor 42 are attracted by the permanent magnets 78, 78 through the conveyor main body 77 and picked up from the bucket conveyor 42. Then, the sheet metals 30 are transferred one by one while being attracted by the permanent magnets and electromagnets 78, 78 toward the downstream.

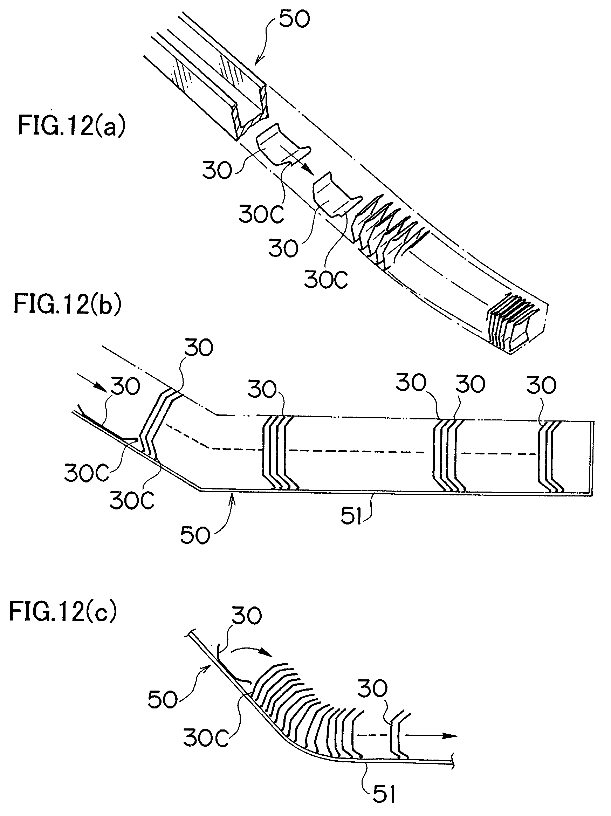

During this transfer, based on OK/NG information generated as a result of the inspection so far, ON/OFF of the plurality of electromagnets 78, 78... is controlled by a control signal from a control apparatus (not shown), which has been tracking the signal, and in this way the sheet metals are separated into OK and NG products. That is, excitation for the electromagnet 78 provided at the position of the NG chute 48 is turned OFF by the above-described control apparatus when an NG product arrives at the position. This causes the NG products to be dropped into the NG chute 48. On the other hand, OK products are stored in an OK chute 50 shown in Figs. 12(a) to 12(c). The sheet metals 30 stored in the OK chute 50 are bent into a cylindrical form and manufactured into film cartridge plates in the following steps.

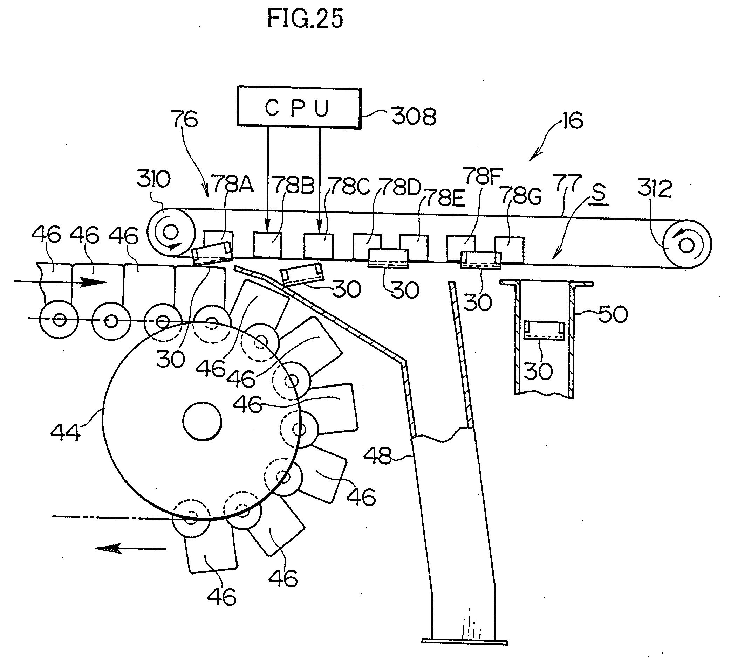

Possible reasons that sheet metals have been decided to be NG products by checks so far include cases where the temperature immediately before the sheet metal 30 enters the pressurization section 64 is outside the temperature range to obtain favorable adhering, the amount of protrusion of the velvet ribbons 54 from the sheet metal 30 due to displacement between the positions of the adhered velvet ribbon 54 and sheet metal 30 is outside the range to obtain favorable light shielding performance, the velvet ribbons 54 are detected to be upside down, the velvet ribbons 54 are doubled with one part stuck to another, the adhesive which should have been adhered to the velvet ribbon 54 is detected to be missing, the sheet metal 30 is detected to be deformed from a correct shape, or printing of the sheet metal 30 is different from the preset printing, etc. This OK/NG separation storage apparatus 16 will be described later using Fig. 25 to Fig. 27.

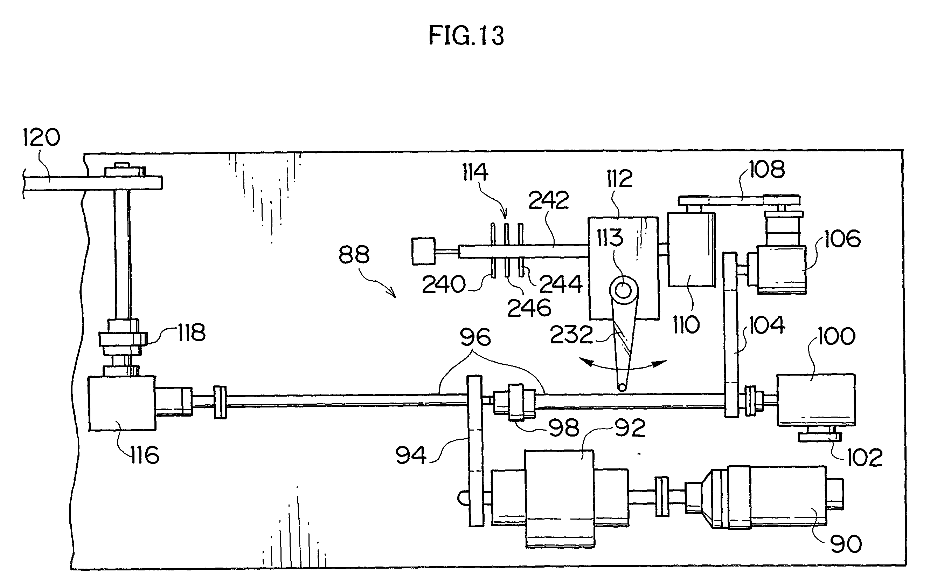

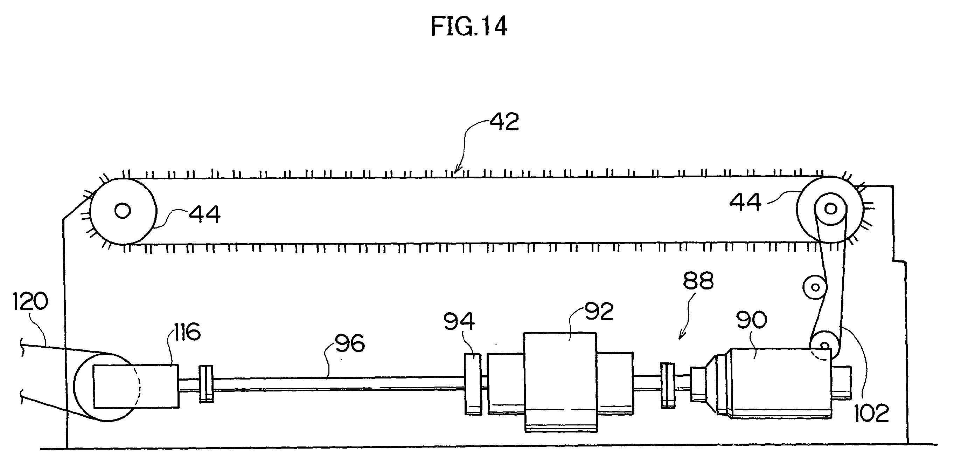

The manufacturing apparatus 10 of this embodiment is provided with a drive mechanism 88 shown in Fig. 13 and Fig. 14 below the second stage processing section 12 shown in Fig. 1 and Fig. 2 and a control panel 80 (see Fig. 1) is provided behind the second stage processing section 12. Furthermore, an operating panel 82 (see Fig. 1) is provided in front of the second stage processing section 12, which operates or stops the apparatus or sets various manufacturing conditions. Furthermore, detected errors are displayed here.

The drive mechanism 88 shown in Fig. 13 and Fig. 14 supplies power to the bucket conveyor 42, cutter units 72 and 74 (see Fig. 1) and the stations 18 to 24 (see Fig. 1) of the first stage processing section 11.

In Fig. 13 and Fig. 14, the drive mechanism 88 is provided with an AC servo motor 90 and rotation power is transmitted from the AC servo motor 90 to a main shaft 96 via a clutch brake 92 by means of a timing belt 94. To the right of the main shaft 96, a torque limiter 98 and a reduction gear 100 are connected so that power can be transmitted to the sprockets 44 of the bucket conveyor 42 by means of a timing belt 102 in Fig. 14. In this way, the bucket conveyor 42 is driven by the power from the AC servo motor 90.

Furthermore, the main shaft 96 is connected to an index unit 112 and cam mechanism 114 via a timing belt 104, a gear box 106, a timing belt 108 and a reduction gear 110 so as to transmit power as shown in Fig. 13. The index unit 112 and cam mechanism 114 are the mechanisms to drive the cutter units 72 and 74 and when the index unit 112 and cam mechanism 114 are driven by the AC servo motor 90, the cutter units 72 and 74 are driven and the velvet ribbons 54 are cut. The index unit 112 and cam mechanism 114 will be explained later.

On the other hand, to the left of the main shaft 96, a gear box 116 and torque limiter 118 are connected so as to transmit power to the drive mechanism 13 of the first stage processing section 11 shown in Fig. 6 and Fig. 7 by means of a timing belt 120. By the way, the torque limiters 98 and 118 in Fig. 13 are provided to protect the drive mechanism 88 in the event of overload due to some problems.

The drive mechanism 13 of the first stage processing section 11 shown in Fig. 6 and Fig. 7 transmits the power of the AC servo motor 90 to the sheet supply station 18, corner cutting station 20, small diameter bending station/acute-angle bending station 22, both ends bending station 24 and feeding bar 28 and at the same time operates all these components at predetermined timing. Furthermore, the drive mechanism 13 of this embodiment uses eccentric cams 122, 124, 126, 128, 130, 132 and 134 of simple structures to provide the above-described operation timing.

The drive mechanism 13 is provided with a shaft 136 that rotates by a timing belt 120 shown in Fig. 7 and a timing belt 142 is stretched between a pulley 138 provided for this shaft 136 and a feeding bar drive pulley 140 in Fig. 6.

As shown in Fig. 6, an end 144A of a link 144 is supported at an eccentric position with respect to the rotation axis 141 of the pulley 140 for driving the feeding bar 28 in a pivotable manner and the other end 144B of the link 144 is supported on the side of the feeding bar 28 in a pivotable manner. This configuration allows the drive power of the timing belt 120 to be transmitted to the shaft 136, timing belt 142 and link 144 via the feeding bar drive pulley 140 and the link 144 moves back and forth in the horizontal direction in Fig. 6. This makes the feeding bar 28 move back and forth with the aforementioned feeding pitch.

On the other hand, the shaft 136 shown in Fig. 7 is connected to a main shaft 148 of the first stage processing section 11 via a drive branch gear box 146, which incorporates a bevel gear. This main shaft 148 is provided with eccentric cams 122 to 128 to operate an air suction cup 38 and upper dies 21, 23 and 40 at the four stations 18, 20, 22 and 24.

At the right end of the main shaft 148 in Fig. 7, a pulley 150 is connected and this pulley 150 is connected to a pulley 156 connected to an acute-angle bending shaft 154 via a timing belt 152. This shaft 154 is provided with eccentric cams 130, 132 and 134 to operate an acute-angle bending operation as shown in Fig. 6.

A rod 162 is connected to the eccentric cam 122 shown in Fig. 6 via a bearing 160. The rod 162 is supported by a guide member (not shown) in such a way as to freely ascend or descend and an air suction cup 38 shown by alternate long and two short dashes line is provided at the top. Therefore, when the main shaft 148 rotates, the rod 162 ascends or descends by an eccentric rotation of the eccentric cam 122. By an ascending motion of the rod 162 at this time, the lowest one of the sheet metals 30 stored in the rack 36 is suctioned one by one by the air suction cup 38 and the sheet metal 30 is passed onto the feeding bar 28 through a descending motion of the rod 162. By the way, a groove or opening to allow the air suction cup 38 to pass is formed on the part of the feeding bar 28 at the left end of Fig. 6.

In Fig. 6 and Fig. 7, a rod 166 is connected to the eccentric cam 124 via a bearing 164. The rod 166 is supported by a guide member (not shown) in such a way as to freely move up and down and on top of the rod 166 is an upper die 21 to constitute a press apparatus of the corner cutting station 20. Therefore, when a main shaft 148 rotates, the rod 166 moves up and down by an eccentric rotation of the eccentric cam 124. The sheet metal 30 on the upstream side is transferred to the corner cutting station 20 through feeding pitch movement of the feeding bar 28 at ascending motion timing of the rod 166 at this time. Then, through a descending motion of the rod 166, the corner section 30A of the sheet metal 30 is cut by an upper die 21 (see Fig. 9(b)).

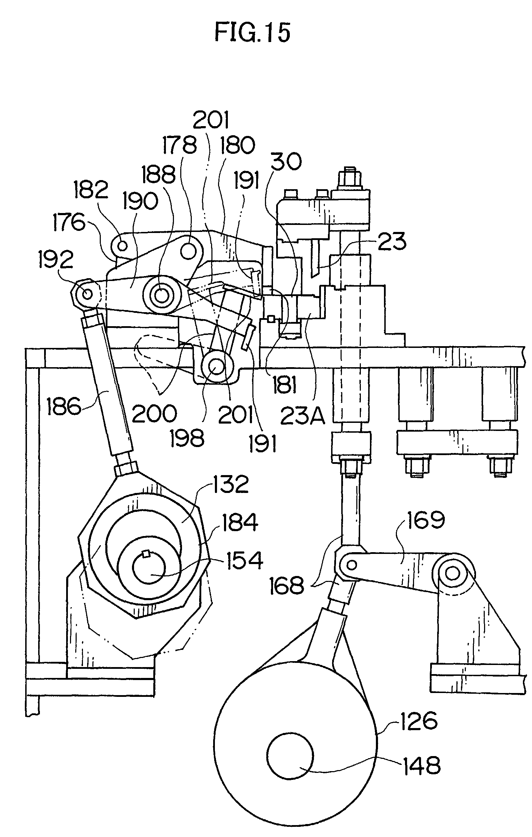

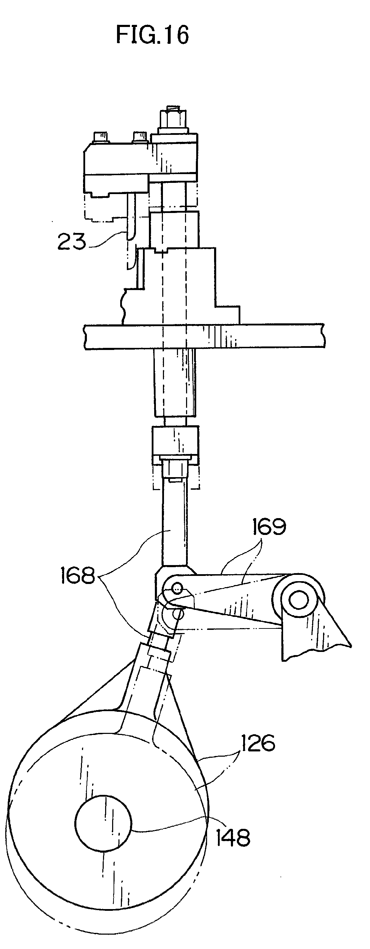

A rod 168 is connected to the eccentric cam 126 via a bearing 127 (see Fig. 7). The rod 168 is supported by a guide arm 169 shown in Fig. 15 and Fig. 16 in such a way as to freely move up and down and on top of the rod 168 is an upper die 23 to constitute a small diameter press apparatus of the small diameter bending station/acute-angle bending station 22. Therefore, when the main shaft 148 rotates, the rod 168 moves up and down by an eccentric rotation of the eccentric cam 126. The sheet metal 30 on the upstream side is transferred to the lower die 23A of the small diameter bending station/acute-angle bending station 22 through feeding pitch movement of the feeding bar 28 at ascending motion timing of the rod 168 at this time. Then, through a descending motion of the rod 168, the upper die 23 descends toward the sheet metal 30 and in this way a bent section R is formed on the sheet metal 30 (see Fig. 9(c)).

Road 170 and 172 are connected to the eccentric cam 128 shown in Fig. 7 via a bearing 129. The rod 172 is supported by a guide member (not shown) in such a way as to freely move up and down and on top of the rod 172 is an upper die 40 to constitute a press apparatus of the both ends bending station 24. Therefore, when the main shaft 148 rotates, the rod 172 moves up and down by an eccentric rotation of the eccentric cam 128. The sheet metal 30 on the upstream side is transferred to the both ends bending station 24 through feeding pitch movement of the feeding bar 28 at ascending motion timing of the rod 172 at this time. Then, through a descending motion of the rod 172, both ends 30B and 30C of the sheet metal 30 are formed to a predetermined curvature (see Fig. 9(d)).

Then, the acute-angle bending eccentric cams 130, 132 and 134 attached to the acute-angle bending shaft 154 in Fig. 7 will be explained.

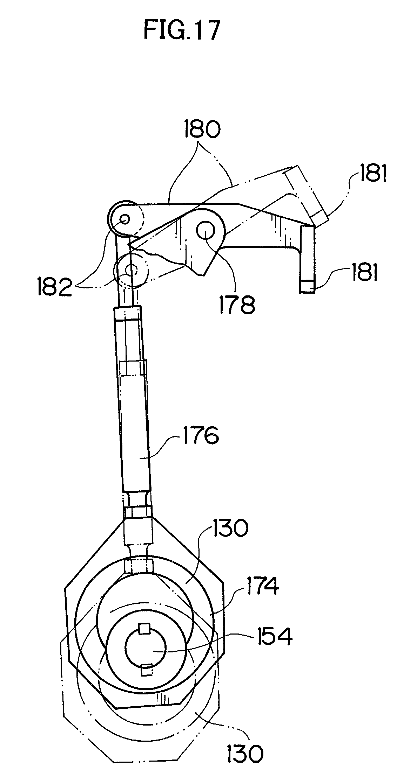

A rod 176 shown in Fig. 17 is connected to the eccentric cam 130 via a bearing 174. The top end of this rod 176 is supported in pivotable manner via a pin 182 to the left end of a work holding arm 180 which is supported by a pin 178 near the lower die 23A shown in Fig. 15 in such a way as to swing freely. A holding section 181 is formed at the right end of the work holding arm 180 and this holding section 181 presses the sheet metal 30 mounted in the lower die 23A against the lower die 23A and positions the sheet metal 30.

Therefore, when the shaft 154 rotates, the rod 176 moves up and down by an eccentric rotation of the eccentric cam 130. Through a descending motion of the rod 176 at this time, the work holding arm 180 swings counterclockwise in Fig. 15 around the pin 178 and the holding section 181 moves away above the lower die 23A and thereby the sheet metal 30 on the upstream side is transferred to the small diameter bending station/acute-angle bending station 22 through a feeding pitch motion of the feeding bar 28. Then, through an ascending motion of the rod 176, the work holding arm 180 swings clockwise in Fig. 15 around the pin 178 and the holding section 181 presses the sheet metal 30 against the lower die 23A. In this way, the sheet metal 30 is positioned with respect to the lower die 23A.

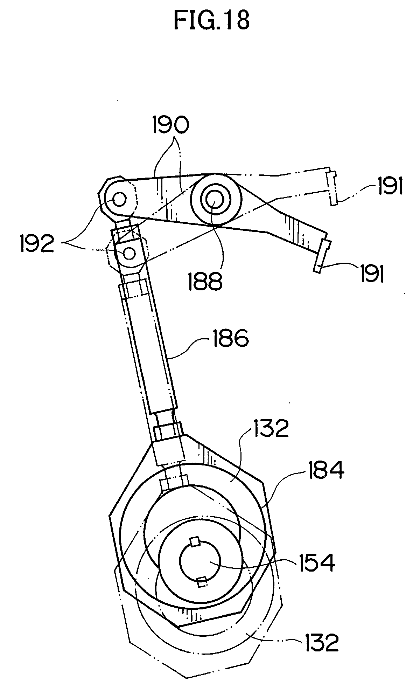

A rod 186 shown in Fig. 18 is connected to the eccentric cam 132 shown in Fig. 7 via a bearing 184. The top end of this rod 186 is supported in a pivotable manner via a pin 192 to the left end of a 90-degree folding arm 190 which is supported by a pin 188 near the lower die 23A shown in Fig. 15 in such a way as to swing freely. A folding section 191 is formed at the right end of the 90-degree folding arm 190 and this folding section 191 folds the other end 30C of the sheet metal 30 mounted in the lower die 23A 90 degrees.

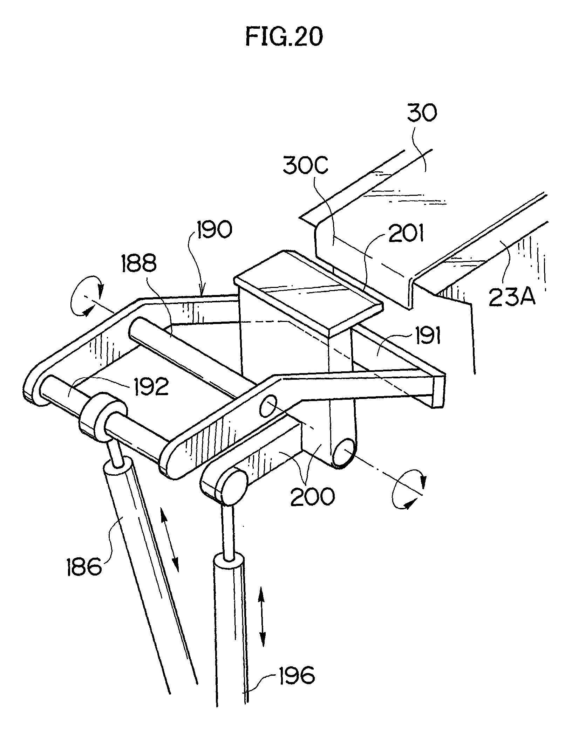

Therefore, when the shaft 154 rotates, the rod 186 moves up and down by an eccentric rotation of the eccentric cam 132. Through a descending motion of the rod 186 at this time, the 90-degree folding arm 190 swings counterclockwise in Fig. 15 around the pin 188 and the folding section 191 moves away above the lower die 23A as indicated by alternate long and two short dashes line in Fig. 15 and thereby the sheet metal 30 on the upstream side is transferred to the small diameter bending station/acute-angle bending station 22 through a feeding pitch motion of the feeding bar 28. Then, through an ascending motion of the rod 186, the 90-degree folding arm 190 swings clockwise in Fig. 15 around the pin 188 and lets the folding section 191 collide with the other end 30C of the sheet metal 30 to bend the other end 30C 90 degrees. By the way, the 90-degree folding arm 190 is formed like a frame as shown in Fig. 20. An angling arm 200 which will be described later is placed in this frame of the 90-degree folding arm 190 without interference. In Fig. 20, the work holding arm 180 (see Fig. 17) is omitted.

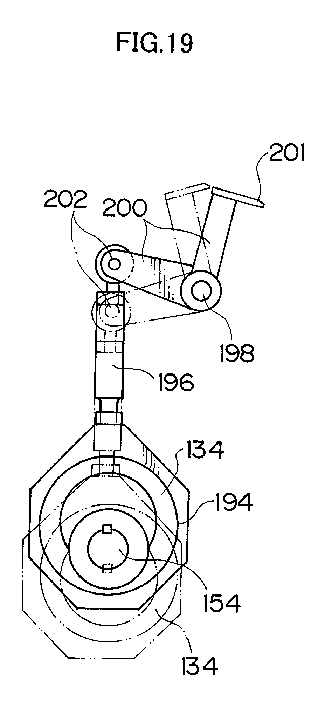

A rod 196 shown in Fig. 19 is connected to the eccentric cam 134 shown in Fig. 7 via a bearing 194. The top end of this rod 196 is supported in a pivotable manner via a pin 202 to the left end of a V-figured angling arm 200 which is supported by a pin 198 near the lower die 23A shown in Fig. 15 in such a way as to swing freely. A bladed section 201 is formed at the right end of the angling arm 200 and this bladed section 201 applies acute-angle bending to the other end 30C of the sheet metal 30 mounted in the lower die 23A.

Therefore, when the shaft 154 rotates, the rod 196 moves up and down by an eccentric rotation of the eccentric cam 134. Through a descending motion of the rod 196 at this time, the angling arm 200 swings counterclockwise in Fig. 15 around the pin 198 and the bladed section 201 moves away above the lower die 23A as indicated by alternate long and two short dashes line in Fig. 15 and thereby the sheet metal 30 on the upstream side is transferred to the small diameter bending station/acute-angle bending station 22 through a feeding pitch motion of the feeding bar 28. Then, through an ascending motion of the rod 196, angling arm 200 swings clockwise in Fig. 15 around the pin 198 and the bladed section 201 collides with the other end 30C of the sheet metal 30 and the other end 30C is subjected to acute-angle bending.

By the way, the drive branch gear box 146 shown in Fig. 7 is provided with a manual handle 147 to move the apparatus at a micro speed for adjustment and checking.

Then, an operation of the small diameter bending station/acute-angle bending station 22 in the above-described configuration will be explained.

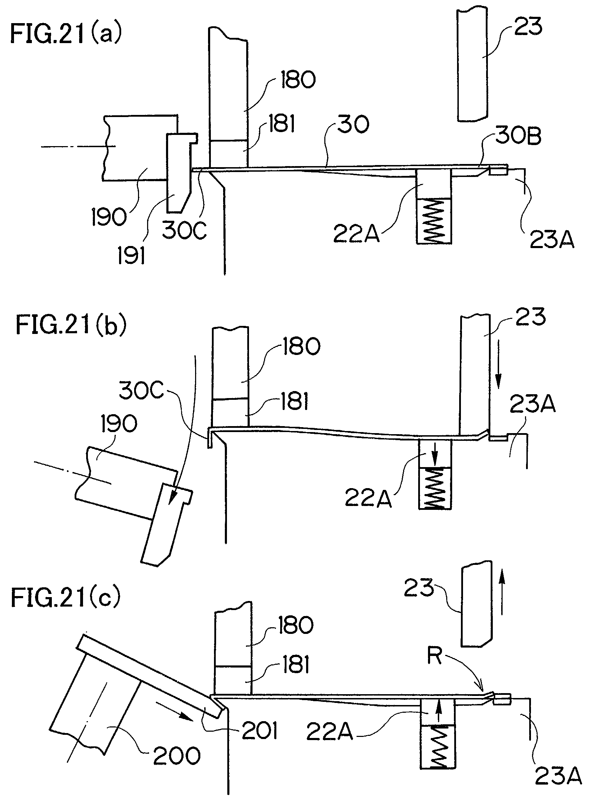

First, as shown in Fig. 21(a), the upper die 23 for small diameter bending is placed at the right of the figure and an acute-angle bending work holding arm 180, 90-degree folding arm 190 and angling arm 200 are placed to the left of the upper die 23 in the figure. That is, the small diameter bending upper die 23 and the acute-angle bending arms 180, 190 and 200 are placed in such a way that these components do not interfere with one another.

With the small diameter bending station/acute-angle bending station 22 with such a positional relationship, the sheet metal 30 is transferred from the upstream to the lower die 23A. The sheet transfer rail of this part is separated and constitutes a lower die 23A and a lifter 22A, which is embedded there and movable in the vertical direction. First, the work holding arm 180 which has moved away above the lower die 23A moves downward (swings clockwise in Fig. 15) and presses the sheet metal 30 against the lower die 23A using the holding section 181 as shown in Fig. 21(a) and positions the sheet metal 30 in the lower die 23A.

Then, the upper die 23 moves downward as shown in Fig. 21(b), presses the lifter 22A down via the sheet metal 30, forms a bent section R at one end 30B of the sheet metal 30 using the lower die 23A and upper die 23 and at the same time the 90-degree folding arm 190 moves downward and the folding section 191 of the 90-degree folding arm 190 bends the other end 30C of the sheet metal 30 90 degrees.

Then, as shown in Fig. 21(c), the angling arm 200 approaches the sheet metal 30 and the bladed section 201 applies acute-angle bending to the other end 30C of the sheet metal 30.

In this way, the bent section R and acutely-angled section can be formed by using the same station 22.

Thus, the manufacturing apparatus 10 of this embodiment unites the small diameter bending station 3 (see Fig. 28) and the acute-angle bending station 4 which have been conventionally installed separately. This has been implemented by focusing attention to the following points. That is, the small diameter bending station is a station that applies bent section R to the one end 30B of the sheet metal 30 with the sheet metal 30 positioned and the acute-angle bending station is a station that applies acute-angle bending to the other end 30C of the sheet metal 30 also with the sheet metal 30 positioned. In short, although the small diameter bending station and the acute-angle bending station are integrated, these stations process different locations of the sheet metal 30 and therefore the apparatuses of both stations do not interfere with each other and there is no problem with the integration.

Thus, the manufacturing apparatus 10 of this embodiment that unites the small diameter bending station and the acute-angle bending station has a shorter transfer line of the sheet metal 30, and is therefore smaller than the conventional apparatus and small diameter bending and acute-angle bending are performed simultaneously through one-time positioning by the work holding arm 180 improving the processing accuracy, too.

Then, the cutting operation of the velvet ribbon 54 will be explained taking the cutter unit 72 which is driven by the cutter moving device made up of an index unit 112 and cam mechanism 114 shown in Fig. 13 and Fig. 22 as an example. Since the structure of the cutter unit 74 and the cutting operation of the velvet ribbon 54 are the same as those of the cutter unit 72, only the cutter unit 72 will be explained here and the explanation of the cutter unit 74 is omitted here.

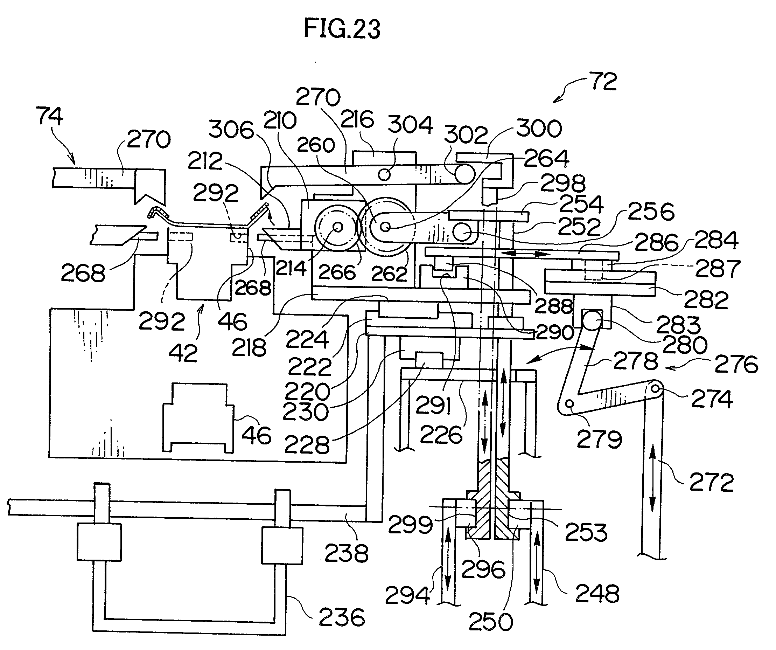

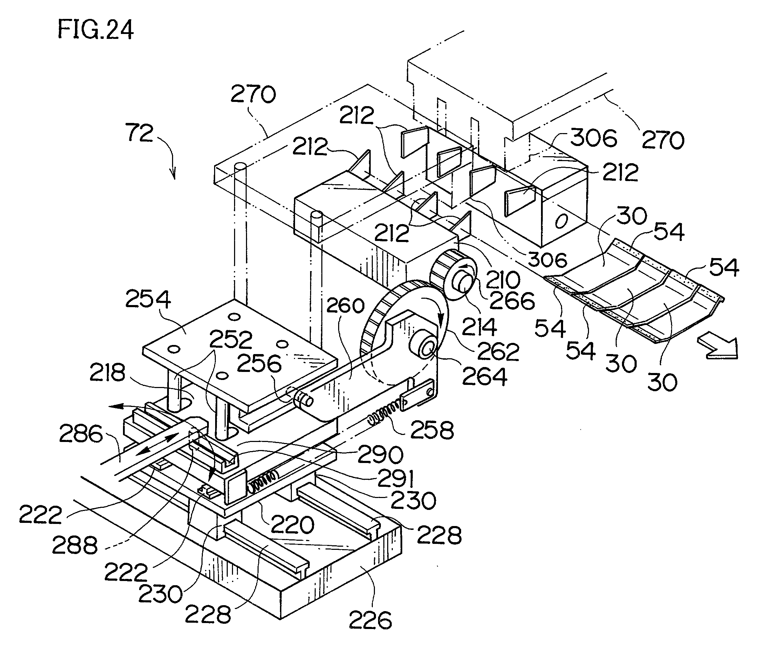

As shown in Fig. 23 and Fig. 24, the cutter unit 72 is provided with a head 210 placed at the side of the bucket conveyor 42 and four cutters 212, 212... are fixed on the opposite side of the bucket conveyor 42 of the this head 210. These cutters 212, 212... are set at such intervals that they can cut the sheet metals 30, 30... connected by the velvet ribbons 54 into individual sheet metals 30. The number of cutters 212, 212... fixed to the head 210 is not limited to four, but is set based on the moving speed of the head 210 which will be explained later and the transfer speed of the sheet metals 30 by the bucket conveyor 42.

The head 210 is supported on a base 216 in such a way as to swing freely via an axis 214 placed in parallel to the transfer direction of the bucket conveyor 42 as shown in Fig. 23. This causes the head 210 to swing in the direction perpendicular to the transfer direction of the sheet metals 30 by the bucket conveyor 42. Through this swing operation, the four cutters 212, 212... are inserted into a gap between the front end and back end of the adjacent sheet metals 30, 30 and the four cutters 212, 212... cut the velvet ribbons 54 simultaneously. The four sheet metals 30, 30... are separated by this single cutting operation.

The base 216 is placed on a first table 218 in an upright position and the first table 218 is provided on guide rails 222 of a pair of translation guides set on a second table 220 via a slider 224 in a slidable manner. Furthermore, the guide rails 222 are placed in the direction perpendicular to the transfer direction of the sheet metals 30 by the bucket conveyor 42, and therefore the base 216 is moved back and forth in the above-described perpendicular direction. This allows the cutters 212, 212... to move back and forth via the base 216 and head 210 in the direction perpendicular to the sheet metals 30 being transferred by the bucket conveyor 42.

The second table 220 is provided on guide rails 228 of a pair of translation guides set on a frame 226 via a slider 230 in a slidable manner. Furthermore, the guide rails 228 are placed in parallel to the transfer direction of the sheet metals 30 by the bucket conveyor 42, and therefore the second table 220 is moved back and forth in the above-described parallel direction. This allows the cutters 212, 212... to move back and forth via the first table 218, base 216 and head 210 linearly in the direction parallel to the sheet metals 30 being transferred by the bucket conveyor 42.

The device, which moves the second table 220 in the above-described parallel direction, is the index unit 112 shown in Fig. 22. The index unit 112 is a known mechanism, which converts the torque output from the output axis 111 of the reduction gear 110 to a swing rotation and transmits it to the output axis 113 of the index unit 112. The output axis 113 is provided with a base end of an arm 232 and a recess connection plate 236 is fixed to the end of this arm 232 via a crank connection bar 234. Furthermore, the second table 220 shown in Fig. 23 is connected to the connection plate 236 via a reverse L-figured connection member 238.

Therefore, when the output axis 113 of the index unit 112 swing-rotates, the forward rotation of the swinging causes the second table 220 to be moved in the transfer direction of the sheet metals 30 by the bucket conveyor 42 via the connection plate 236 and connection member 238. Together with the movement in this direction, the cutters 212, 212... are moved in synchronization with the sheet metals 30 and when the moving speed of the cutters 212, 212... coincides with the above-described transfer speed of the sheet metals 30 during the movement in this direction, the cutters 212, 212... cut the velvet ribbons 54 through a swinging operation of the head 210. When the output axis 113 of the index unit 112 rotates in the backward direction, the second table 220 moves in the direction opposite to the above-described direction and the head 210 returns to the movement start position.

Thus, the cutter unit 72 of this embodiment moves the head 210 back and forth linearly and cuts the velvet ribbons 54 through the cutters 212, 212..., and therefore it takes time to accelerate or decelerate the head 210 or return the head 210 to the movement start position. Thus, though the cutter unit 72 of this embodiment is inferior in manufacturing efficiency to the conventional apparatus which cuts velvet ribbons by circulating the cutters, but when short-run and multiple-device production takes precedence over mass production, this cutter unit 72 suffices and has a simpler structure and is smaller and less expensive than the conventional apparatus.

Then, the structure for a cutting operation of the cutters 212, 212... will be explained. The cam 240 of the cam mechanism 114 in Fig. 22 which makes the cutters 212, 212... perform a cutting operation is provided on the rotation output axis 242 of the index unit 112. The output axis 242 is provided with two cams 244 and 246 in addition to the cam 240. These cams 244 and 246 will be described later.

The cam 240 is connected with a link 248, which moves up and down through a rotational operation of the cam 240, the top end of this link 248 is bifurcated, one side of which is connected to a cam follower 250 and the other side of which is connected to a cam follower 251. The cam follower 250 is intended to operate the cutters 212, 212... on the cutter unit 72 side and the cam follower 251 is intended to operate the cutters 212, 212... on the cutter unit 74 side.

The cam follower 250 is engaged with the lower engagement recess section 253 of the rod 252 which is placed in an upright position in the vertical direction as shown in Fig. 23. The rod 252 is engaged with the second table 220 and moves back and forth together with the second table 220 in the transfer direction of the sheet metals. At this time, the lower engagement recess section 253 of the rod 252 is guided by the cam follower 250 so as to move back and forth smoothly.

A stopper plate 254 is provided at the top of the rod 252 and a cam follower 256 is pressed against the lower surface of this stopper plate 254 by a spring force of a tension spring 258 shown in Fig. 24. The cam follower 256 is fixed at the right end in Fig. 23 and the left end of this arm 260 is fixed to an axis 264 of a gear 262, which is supported on the base 216 in a pivotable manner. The tension spring 258 generates the above-described spring force with one end attached to the arm 260 and the other end attached to the first table 218 as shown in Fig. 24.

The gear 262 is engaged with a gear 266. This gear 266 is fixed to an axis 214, which supports the head 210 on the base 216 in such a way as to swing freely. Therefore, when the rod 252 moves upward through an operation of the cam 240 shown in Fig. 22, the arm 260 rotates counterclockwise with the axis 264 as a fulcrum in Fig. 23. This causes the gear 262 fixed to the arm 260 via the axis 264 to rotate counterclockwise together with the arm 260, and the gear 266 engaged therewith rotates clockwise and the head 210 swings clockwise with the axis 214 as a fulcrum. Through this swinging operation, the cutters 212, 212... cut the velvet ribbons 54. On the contrary, when the rod 252 moves downward through an operation of the cam 240, the arm 260 rotates clockwise with the axis 264 as a fulcrum in Fig. 23. This causes the gear 262 to rotate clockwise and the gear 266 engaged therewith rotates counterclockwise and the head 210 swings counterclockwise with the axis 214 as a fulcrum. Through this swinging operation, the cutters 212, 212... are moved to the cutting start position of the velvet ribbons 54.

By the way, the cutter unit 72 of this embodiment is provided with a positioning pin 268 to position the head 210 with respect to the conveyor 46 of the bucket conveyor 42 immediately before the cutters 212, 212... cut the velvet ribbons 54. Furthermore, the cutter unit 72 is provided with a displacement prevention member 270 that presses the sheet metals 30 transferred by the bucket conveyor 42 against the upper surface of the conveyor 46 to prevent displacement with respect to the conveyor immediately before the cutters 212, 212... cut the velvet ribbons 54.

The above-described positioning pin 268 is operated by the cam 244 shown in Fig. 22. A link 272 which moves up and down through a rotational operation of the cam 244 is connected to the cam 244 and the top end of the link 272 is bifurcated and a cam follower 274 is attached to one end and a cam follower 275 is attached to the other end. The cam follower 274 is intended to operate the positioning pin 268 on the cutter unit 72 side and the cam follower 275 is intended to operate the positioning pin 268 on the cutter unit 74 side.

The cam follower 274 is connected to the L-figured arm 278 that makes up the horizontal swinging mechanism 276 shown in Fig. 23. The arm 278 is provided in such a way as to swing freely around the axis 279 attached to the corner and at the same time a slide connection section 280 attached to the upper section of the arm 278 is supported on the reverse recess connection section 283 of the horizontal transfer table 282 in such a way as to slide freely. In this way, when the arm 278 is swung in the direction indicated by the arrow with the axis 279 as a fulcrum, the horizontal transfer table 282 is pushed by the slide connection section 280 of the arm 278 and moved back and forth in the direction perpendicular to the transfer direction of the sheet metals 30.

On top of the horizontal transfer table 282, an axis 287 of a swing arm 286 is supported via a bearing 284. The swing arm 286 is placed in the horizontal direction and a pin 288 is fixed face down to the end thereof. The pin 288 is engaged with a groove 291 formed in parallel to the transfer direction of the sheet metals of the guide member 290 placed on the first table 218 as shown in Fig. 24.

Therefore, when the arm 278 is swung counterclockwise in Fig. 23 with the axis 279 as a fulcrum by the horizontal swinging mechanism 276 shown in Fig. 23 through an operation of the cam 244 shown in Fig. 22, the swing arm 286 moves leftward in Fig. 23. At this time, the first table 218 moves in parallel to the transfer direction of the sheet metals, and therefore the swing arm 286 moves leftward in Fig. 23 while practically swinging with the axis 287 as a fulcrum. When the swing arm 286 moves in this direction, the first table 218 is pushed by the pin 288 and moves leftward in Fig. 23. In this way, the base 216 approaches the bucket conveyor 42 and the positioning pins 268, 268... fixed to the base 216 are engaged with holes 292, 292... formed on the sides of the bucket 46. Through this operation, the base 216 is positioned with respect to the bucket 46. That is, the cutters 212, 212... are positioned with respect to the sheet metals 30, 30... mounted in the buckets 46, 46.... By the way, the tips of the positioning pins 268 and the entrance edges of the holes 292 are tapered, and therefore when the base 216 is not aligned with the bucket 46, the tapering surfaces contact with each other and the positioning pins 268 are further pushed in, which causes the base 216 to move by a small amount in the transfer direction of the sheet metals and to be automatically positioned with respect to the bucket 46. The above-described micro transfer of the base 216 during positioning is made possible by a translation guide provided between the second table 220 and frame 226.

On the other hand, the displacement prevention member 270 is operated by the cam 246 shown in Fig. 22. The cam 246 is connected with a link 294 that moves up and down through a rotational operation of the cam 246 and the top end of the link 294 is bifurcated and a cam follower 296 is attached to one end and a cam follower 297 is attached to the other end. The cam follower 296 is intended to operate the displacement prevention member 270 on the cutter unit 72 side and the cam follower 297 is intended to operate the displacement prevention member 270 on the cutter unit 74 side.

The cam follower 296 is engaged with a lower engagement recess section 299 of the rod 298 placed in an upright position in the vertical direction as shown in Fig. 23. The rod 298 is engaged with the second table 220 and moved back and forth in the sheet metal transfer direction together with the second table 220. At this time, the lower engagement recess section 299 of the rod 298 is guided by the cam follower 296 and moved back and forth as described above.

A stopper plate 300 is attached to the top end of the rod 298 and a cam follower 302 is pressed against the lower surface of the stopper plate 300 by a spring force of a tension spring (not shown). The cam follower 302 is fixed at the right end of the displacement prevention member 270 in Fig. 23 and the quasi-central area of this displacement prevention member 270 is supported on the base 216 via an axis 304 in such a way as to swing freely. Furthermore, five holding lugs 306, 306... are formed face down at the left end of the displacement prevention member 270 in Fig. 23.

Therefore, when the rod 298 moves up through the operation of the cam 246 shown in Fig. 22, the displacement prevention member 270 rotates counterclockwise with the axis 304 as a fulcrum in Fig. 23 by the above-described spring force in conjunction with the above-described movement. This operation causes the holding lugs 306, 306... of the displacement prevention member 270 to move downward toward the sheet metals 30, 30... to be cut and press these sheet metals 30, 30... against the upper surface of the bucket 46. In this way, the sheet metals 30, 30... whose velvet ribbons 54 are cut by the cutters 212, 212... are sandwiched between the holding lug 306 and bucket 46, preventing displacement of the sheet metals 30 with respect to the bucket 46. Therefore, the sheet metals 30 are positioned to the bucket 46 accurately by this displacement prevention member 270 and the above-described positioning pin 268 and then the velvet ribbons 54 are cut by the cutters 212, 212....

Next, the cutting operation of the cutter unit 72 configured as shown above will be explained.

First, the cutting start position of the cutter unit 72 is the position where the head 210 is placed upstream in the transfer direction of the sheet metals and where the head 210 moves away from the bucket conveyor 42 as shown in Fig. 23. It is also the position where the head 210 has moved downward away from the cutting position of the velvet ribbons 54 as shown in Fig. 23 and where the holding lug 306 of the displacement prevention member 270 has moved upward away from the holding position of the sheet metals 30.

Then, when the cutting operation starts, the head 210 moves synchronously from the above-described cutting start position in the same direction as the transfer direction of the sheet metals 30 by the bucket conveyor 42 through the forward operation of the index unit 112. Then, when the movement of the head 210 is accelerated up to the sheet metal transfer speed, that is, immediately before the cutters 212, 212...cut the velvet ribbons 54, the cam 244 operates the base 216 and the base 216 is thereby pushed toward the bucket conveyor 42. In this way, the positioning pin 268 is engaged with the hole 292 of the bucket 46 and the cutters 212, 212... are positioned with respect to the sheet metals 30, 30... mounted in the buckets 46, 46....

Furthermore, in synchronization with this operation, the cam 246 operates the displacement prevention member 270 and the sheet metals 30, 30... are sandwiched between the holding lug 306 and buckets 46, 46.... Thus, the sheet metals 30, 30... are positioned with respect to the buckets 46 accurately by the displacement prevention member 270 and the above-described positioning pin 268.

Then, through the upward movement of the rod 252 by the operation of the cam 240, the head 210 swings centered on the axis 214 in the direction perpendicular to the transfer direction of the sheet metals 30. This causes the cutters 212, 212... to be inserted into a gap between the front end and back end of the sheet metals 30, 30... being transferred, and therefore the velvet ribbons 54 are cut simultaneously.

When the cutting of the velvet ribbons 54 is completed, the displacement prevention member 270 is operated by the cam 246 and the holding lug 306 moves away from the sheet metals 30, 30... and the base 216 is operated by the cam 246 and the positioning pin 268 moves away from the hole 292 of the bucket 46.

After this, through the backward operation of the index unit 112, the head 210 is moved linearly from downstream to upstream. Then, through the downward movement of the rod 252 by the operation of the cam 240, the head 210 is swung downward away from the cutting position of the velvet ribbons 54. Through the above-described operations, the cutter unit 72 is returned to the cutting start position. Then, by repeating the above-described operation, the velvet ribbons 54 are cut consecutively.

Then, the OK/NG separation storage apparatus 16 will be explained with reference to Fig. 25 to Fig. 27.

This OK/NG separation storage apparatus 16 is mainly constructed of the magnet conveyor 76 as shown in Fig. 25. The magnet conveyor 76 is spanned between a pair of pulleys 310 and 312 and is constructed of a belt 77 that circulates in the direction indicated by the arrow and seven magnets (attraction devices) 78A to 78G placed in the circulation direction of this belt 77. Furthermore, of the magnets 78A to 78G, the magnets 78A, 78D, 78E, 78F and 78G are permanent magnets and the magnets 78B and 78C are electromagnets of which ON/OFF is controlled by a CPU 308. These magnets 78A to 78G are set in such sizes and at such intervals that the sheet metals 30 are not attracted simultaneously by the three magnets.

Then, the operation of the OK/NG separation storage apparatus 16 will be explained below.

The sheet metals 30 transferred by the bucket conveyor 42 are attracted by the permanent magnet 78A on the upstream side through the belt 77 and picked up from the bucket conveyor 42. Near the permanent magnet 78A is a non-contact sensor (not shown) to detect whether the sheet metal 30 is attracted by the permanent magnet 78A or not.

Then, through the circulation of the belt 77, the sheet metal 30 is attracted from the permanent magnet 78A at the upstream side to the adjacent electromagnet 78B and when this attraction/transfer operation is repeated from the permanent magnet 78A on the upstream side to the magnet 78G on the downstream side, the sheet metals 30 are transferred one by one in the circulation direction of the belt 77.

The belt 77 is set to run faster than the bucket conveyor 42. Therefore, when one sheet metal 30 transferred at short intervals on the bucket conveyor 42 is attracted and transferred by the belt 77, its distances from the preceding and following sheet metals 30 are widened. This distance is determined by the speed ratio of the belt 77 to the bucket conveyor 42. For example, if the belt 77 runs twice as fast as the bucket conveyor 42, the distance produced is almost the same as the width of the sheet metal 30.

Here, there are two purposes in providing a distance between the preceding and following sheet metals 30. The first purpose is to allow stable dropping when the sheet metals 30 are dropped from the belt 77 into the OK chute 50 or the NG chute 48 without interference with the preceding and following sheet metals 30. The second purpose is, of the sheet metals 30 which are separated when the ribbon cutting mechanism 72 cuts the velvet ribbons 54 adhered to the sheet metals 30, to detect the sheet metals 30 whose separation has failed. That is, when the permanent magnet 78A attracts a sheet metal 30 which remains connected with another sheet metal 30 because of a failure in cutting the ribbons 54 to the belt 77, even if the belt 77 running faster than the bucket conveyor 42 tries to transfer the sheet metal 30, the following sheet metal 30 connected thereto via the ribbon 54 still remains in the low-speed bucket conveyor 42 and cannot thereby keep up with the belt 77, slips and delays. At this moment, the aforementioned sensor, which detects whether the aforementioned sheet metal 30 has been attracted normally or not cannot detect the sheet metal 30 at correct timing, which indicates an abnormal state. In this case, the sheet metal 30 is regarded as an NG product. The following sheet metal 30 connected to this NG sheet metal 30 is also handled in the same way.

During this transfer, the sheet metals 30 are separated into OK and NG products through ON/OFF control of the electromagnets 78B and 78C by a control signal from the CPU 308 which has been tracking the signal based on the OK and NG information resulting from an inspection by the sheet metal inspection device installed in the sheet metal transfer path so far. That is, the magnetism of the electromagnets 78B and 78C provided above the NG chute 48 is cut by the CPU 308 when an NG product arrives at their positions. This causes the NG product to drop into the NG chute 48. Thus, turning OFF the two electromagnets 78B and 78C allows the NG product to drop into the NG chute 48 before being attracted by the permanent magnet 78D. By the way, near the permanent magnet 78D is a non-contact sensor (not shown) which detects whether the permanent magnet 78D attracts the sheet metal 30 or not and if this sensor detects that a NG sheet metal 30 is attracted to the permanent magnet 78D, the control section regards it as an error and stops the magnet conveyor 76.

Possible reasons that sheet metals have been decided to be NG products by inspections so far include cases where the temperature immediately before the sheet metal 30 enters the pressurization section 64 is outside the temperature range to obtain favorable adhering, the amount of protrusion of the velvet ribbons 54 from the sheet metals 30 due to displacement between the positions of the adhered velvet ribbons 54 and sheet metals 30 is outside the range to obtain favorable light shielding performance, the velvet ribbons 54 are detected to be upside down, the velvet ribbons 54 are doubled with one part stuck to another, the adhesive which should have been adhered to the velvet ribbons 54 is detected to be missing, the sheet metal 30 is detected to be deformed from a correct shape, or printing of the sheet metal 30 is different from the preset printing, or ribbon cutting fails and a plurality of sheet metals 30 remain connected, etc.

On the other hand, the OK chute 50 is placed below a position S separate toward the downstream side in the transfer direction by a predetermined distance (corresponding to the width of one sheet metal 30) from the permanent magnet 78G located most downstream. When the OK chute 50 is placed below such a position S, then an OK sheet metal 30 transferred to the position S drops from the belt 77 into the OK chute 50 due to a reduction of a magnetic force of the permanent magnet 78G. This allows the sheet metals 30 to be separated into OK and NG products and stored.

Thus, the OK/NG separation storage apparatus 16 of this embodiment places a plurality of magnets 78A to 78G fixedly in the circulation direction of the belt 77 and of these magnets 78A to 78G, the CPU 308 controls ON/OFF of the electromagnets 78B and 78C located above the NG chute 48 based on OK/NG information and separates the sheet metals 30, and can thereby provide a small and simple OK/NG separation storage apparatus 16.

On the other hand, the OK sheet metals 30 are dropped into the OK chute 50 which makes up the storage apparatus in Fig. 12(a) with the acute-angle bending side (end 30C side) down.

The OK chute 50 is inclined a predetermined angle and has the quasi-same width as that of the sheet metal 30. The sheet metals 30 slip down into the OK chute 50 with the acute-angle bending side down. However, since the bottom end 51 of the OK chute 50 is formed to be horizontal as shown in Fig. 12(b), when a sheet metal 30 which slips down collides with the acute-angle bending part of the already stored lying sheet metal 30 as shown in Fig. 12(c), the lying sheet metal 30 stands up through a pushing force by the above-described collision and as a result it is stored in the horizontal section 51 in an upright position with the acute-angle bending side down. The inclination angle of the OK chute 50 acting in this way ranges from 20° to 45°, but the inclination angle is more preferably set to 30° to 35° and set according to the manufacturing speed. The sheet metals 30 stored in the OK chute 50 are bent into a cylindrical form and manufactured into a film cartridge plate in the following steps.

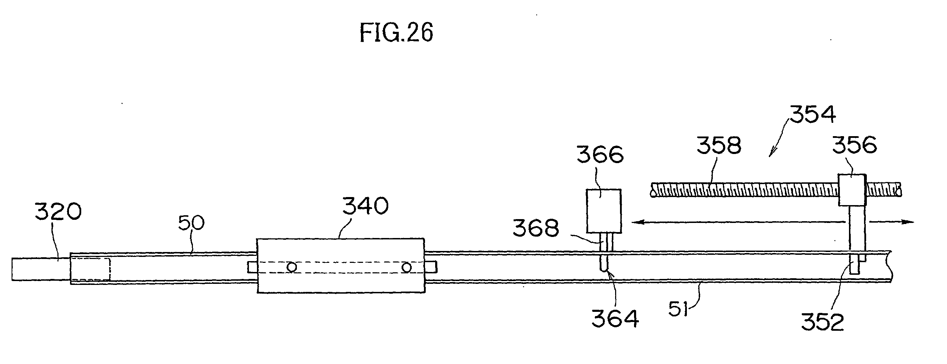

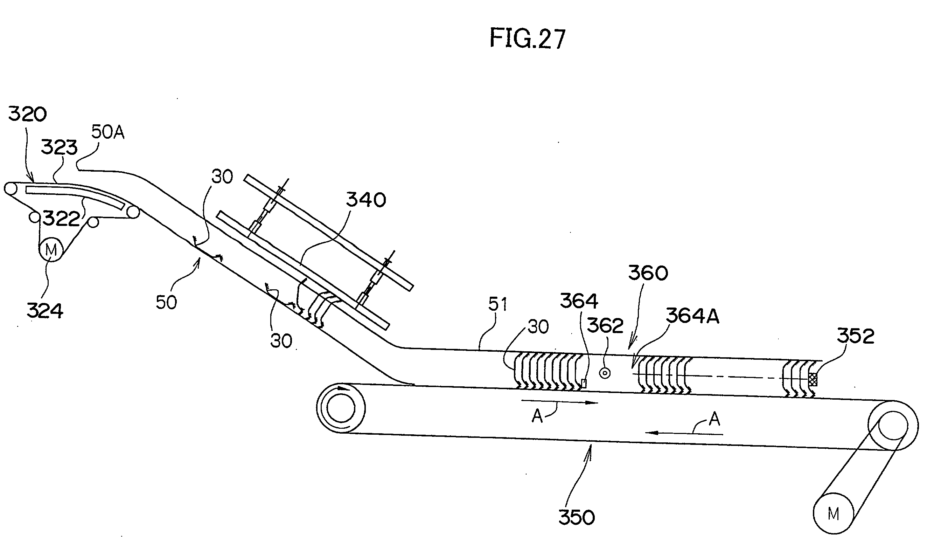

The storage apparatus of this embodiment is provided with incidental equipment shown in Fig. 26 and Fig. 27 as a separate part or an integral part.

An example of this incidental equipment is a belt conveyor 320 installed at the entrance 50A of the OK chute 50 to enhance the chuting speed. A magnet 322 is placed on the back of the belt 323 of this belt conveyor 320 to enhance the force of the belt 323 to attract and hold the sheet metals 30. Furthermore, the belt 323 is circulated by a drive force of a motor 324 in the direction in which the sheet metals 30 handed over to the belt 323 are sent into the OK chute 50. This ensures that the sheet metals 30 are sent from the belt conveyor 320 into the OK chute 50 securely and fast.

On the other hand, when the sheet metal 30 which slips down into the OK chute 50 collides with the already stored sheet metal 30 from behind and the acutely-angled section stands up with one acutely-angled section engaged with another, if the speed is high and the impact is too strong, the upper part of the sheet metal 30 may pop up, preventing it from being stored neatly. For this reason, a popup prevention guide 340 is set in the inclined part of the OK chute 50.

In the horizontal section (bottom section) 51 of the OK chute 50, the sheet metals 30, 30... are stored in an upright position with the acutely-angled side down and the operator takes them out as appropriate when the throughput is low.

However, when throughput is high and the amount of storage should be increased, a storage conveyor 350 is provided underneath the horizontal section 51 which is the outlet of the OK chute 50 and the sheet metals 30, 30... stored in the horizontal section 51 are sent to the discharge side by circulating the storage conveyor 350 in the direction indicated by an arrow A in Fig. 27. In this case, a movable stopper 352 is provided which moves along the horizontal section 51 so that one sheet metal 30 catches up with the preceding sheet metal 30 and stands up at a quasi-fixed position and the stopper 352 retrocedes little by little (moves in the downstream direction in the flow of cartridge plates), which allows stable storage. As the drive mechanism of the stopper 352, a feeding screw apparatus 354 shown in Fig. 26 can be used. In this case, the stopper 352 is fixed to a nut section 356 and the nut section 356 is engaged with the feeding screw 358 and at the same time engaged with a translation guide (not shown). Thus, when the screw is run forward or backward using a motor (not shown), the stopper 352 goes back and forth along the horizontal section 51.

Furthermore, when it is desirable to automate an operation of mounting the finished sheet metals 30 into some trays to send them to a downstream step, a transfer apparatus 360 can be provided for the storage conveyor 350. An operation of the transfer apparatus 360 will be explained. When the movable stopper 352 receives the sheet metals 30 that slip down through the OK chute 50 and are stored in an upright position with the acutely-angled side down, the movable stopper 352 retrocedes toward the discharge side. A sensor 362 is provided at some midpoint of the horizontal section 51, which counts the number of sheet metals. When the movable stopper 352 retrocedes up to a predetermined position, it can be assumed that a quasi-fixed number of sheet metals 30, 30... are stored between a partition plate 364 and movable stopper 352. At that time, the bifurcated partition plate 364 is moved to the horizontal section 51 from above through an extension operation of the rod 368 of the cylinder 366 and inserted between the stored sheet metals 30, 30. Since the stored sheet metals 30, 30... contact with one another with the upper and lower ribbons, there is a space between the two neighboring sheet metals 30, 30 themselves and because the partition plate 364 has a tapered part with a sharp edge, the partition plate 364 is easily inserted between the stored sheet metals 30, 30.

Thus, one partition plate 364A of the two-piece partition plate 364 is interlocked with the movable stopper 352 in the discharge direction as shown in Fig. 27 and a predetermined number of stored sheet metals 30, 30... are extracted. The two partition plates 364 create a gap from the following sheet metals 30 and therefore a predetermined number of stored sheet metals 30, 30... may be taken out using a transfer apparatus such as a robot hand.

The extracted sheet metals 30, 30... are mounted in the tray to be supplied to the downstream step. After this, the one partition plate 364A paired with the movable stopper 352 returns to the original position and the partition plate 364 retrocedes and the stored sheet metals 30, 30... come to the movable stopper 352 and continue to be stored. As the transfer apparatus of the one partition plate 364A, a feeding screw apparatus can be used.

As described above, the film cartridge plate manufacturing apparatus according to the present invention unites the small diameter bending station and the acute-angle bending station which have been conventionally installed separately, uses eccentric cams of a simple structure instead of groove cams of a complicated structure, uses a structure that allows the ribbon cutter to linearly perform a reciprocating motion instead of a structure that makes the cutter unit circulate by means of an endless chain, uses a separation station of a simple structure made up of a plurality of attraction devices fixed in the circulation direction of the belt conveyor, and uses a storage station of a simple structure only requiring dropping of sheet metals into an inclined chute, and can thereby drastically reduce the size of the apparatus and provide a film cartridge plate manufacturing method and apparatus which is low-cost, simple and easy to maintain compared to the conventional film cartridge plate manufacturing apparatus.

Furthermore, the film cartridge plate storage apparatus according to the present invention can let the finished film cartridge plates slip down with the acutely-angled section first into the chute which is inclined 20° to 45°, more preferably 30° to 35°, store the film cartridge plates in an upright position with the acutely-angled side down, and can thereby store film cartridge plates in a simple mechanical configuration.

Furthermore, the film cartridge plate manufacturing apparatus according to the present invention uses eccentric cam members instead of groove cams with conventional deformed sine cam curves and thereby provides a simple structure and simplifies the equipment.

Furthermore, the film cartridge plate separation apparatus according to the present invention fixes a plurality of attraction devices in the circulation direction of the belt conveyor, controls ON/OFF of the attraction devices located above the film cartridge plate storage section by the control device based on OK/NG information and separates the film cartridge plates, and can thereby provide a separation apparatus of a small and simple structure.

Furthermore, the method and apparatus for manufacturing film cartridge plate according to the present invention unite the small diameter bending station and the acute-angle bending station which have been conventionally installed separately, thereby shortens the transfer line and can thereby reduce the size of the manufacturing apparatus, improve the processing accuracy and also improve the manufacturing efficiency.

Furthermore, the apparatus for adhering ribbons to the film cartridge plates according to the present invention uses a structure that allows the head section of the cutter unit to linearly perform a reciprocating motion instead of a structure that makes the cutter unit circulate by means of an endless chain, and can thereby provide a smaller and simpler structure than the conventional ribbon adhering apparatus.

Furthermore, the present invention provides a displacement prevention member and a positioning member for the cutter unit, and can thereby cut velvet ribbons more accurately and securely.

It should be understood, however, that there is no intention to limit the invention to the specific forms disclosed, but on the contrary, the invention is to cover all modifications, alternate constructions and equivalents falling within the spirit and scope of the invention as expressed in the appended claims.

## Claims

1. A film cartridge plate manufacturing method, comprising the steps of:
sequentially transferring sheet metals (30) cut in such a way that their length and width are the same as exploded length and width of a film cartridge plate from a sheet supply station (18) by a transfer device (28);
cutting four corners (30A) of the sheet metals (30) into a predetermined shape by a corner cutting station (20) placed in a transfer path of the transfer device (28);
positioning and fixing the sheet metals (30) by a small diameter bending station/acute-angle bending station (22) placed downstream of the transfer path of the corner cutting station (20) and then bending a small diameter bent section (R) in two corners at one end (30B) of the sheet metals (30) and an acutely-angled section at the other end (30C) of the sheet metals (30) simultaneously; and
bending the sheet metals (30) into a predetermined shape of quasi-boat-shaped cross section by a both ends bending station (24) placed downstream of the transfer path of the small diameter bending station/acute-angle bending station (22).

2. The film cartridge plate manufacturing method according to claim 1, further comprising the steps of:
adhering velvet ribbons (54) to both ends (30B, 30C) of the sheet metals (30) by a ribbon adhering station (14) placed downstream of the transfer path of the both ends bending station (24); and
separating the sheet metals (30) into OK products and NG products by a separation station (16) placed downstream in the transfer direction of the ribbon adhering station (14) based on OK/NG information of the sheet metals (30) inspected by a sheet metal inspection device placed in the sheet metal transfer path hitherto.

3. A film cartridge plate manufacturing apparatus (10), comprising:
a sheet supply station (18) which stores sheet metals (30) having the same length and width as exploded length and width of a film cartridge plate;
a transfer device (28) which sequentially picks up the sheet metals (30) from the sheet supply station (18) and transfers the sheet metals (30);
a corner cutting station (20) which is placed in a transfer path of the transfer device (28) and provided with a cutting section (21) which cuts four corners (30A) of the sheet metals (30) into a predetermined shape;
a small diameter bending station/acute-angle bending station (22) which is placed downstream of the transfer path of the corner cutting station (20) and provided with a holding section (180, 181) which positions and fixes the sheet metals (30), a small diameter bending station (23) which bends a small diameter bent section (R) in two corners at one end (30B) of the sheet metal (30) positioned and fixed by the holding section (180, 181) and an acute-angle bending station (190, 191, 200, 201) which bends an acutely-angled section at the other end (30C) of the sheet metal (30) simultaneously with the bending by the small diameter bending station (23); and
a both ends bending station (24) which is placed downstream of the transfer path of the small diameter bending station/acute-angle bending station (22) and provided with a processing section (38, 40) which bends the sheet metals (30) into a predetermined shape of quasi-boat-shaped cross section.

4. The film cartridge plate manufacturing apparatus (10) according to claim 3, further comprising:
a ribbon adhering station (14) which is placed downstream of the transfer path of the both ends bending station (24) and adheres velvet ribbons (54) to both ends (30B, 30C) of the sheet metals (30); and
a separation station (16) which is placed downstream of the transfer path of the ribbon adhering station (14) and separates the sheet metals (30) into OK products and NG products based on OK/NG information of the sheet metals (30) inspected by a sheet metal inspection device placed in the sheet metal transfer path hitherto.

5. The film cartridge plate manufacturing apparatus (10) according to claim 4, wherein:
the processing section of the acute-angle bending station of the small diameter bending station/acute-angle bending station (22) comprises a first processing section (190, 191) which bends the other end (30C) of the sheet metal (30) 90 degrees and a second processing section (200, 201) which bends the other end (30C) bent 90 degrees by the first processing section (190, 191) into an acutely-angled form, thus bending the acutely-angled section; and
the first processing section (190, 191) and the second processing section (200, 201) are each attached to a rotation axis (154) which rotates by torque of a driving motor (90) via respective eccentric cam members (132, 134) and driven by eccentric rotational operations of these eccentric cam members (132, 134).

6. The film cartridge plate manufacturing apparatus (10) according to claim 5, wherein at least one of the processing sections of the corner cutting station (20), the small diameter bending station (23) and the both ends bending station (24) is attached to a rotation axis (148) which rotates by torque of the driving motor (90) via an eccentric cam member (124, 126, 128) and driven by eccentric rotational operation of the eccentric cam member (124, 126, 128).

7. The film cartridge plate manufacturing apparatus (10) according to any one of claims 4 to 6, wherein the ribbon adhering station (14) comprises:
a transfer device (42) which arranges a plurality of the sheet metals (30) with the front end of one sheet metal (30) placed close to the back end of another sheet metal (30) and transfers the sheet metals (30) consecutively;
a crimping device (64) which presses two long adhesive-backed velvet ribbons (54) against the both ends (30B, 30C) of the sheet metals (30) being transferred and adheres the velvet ribbons (54) consecutively;
a pair of cutter units (72, 74) whose head section (210) is placed in such a way as to be movable back and forth along the both ends (30B, 30C) of the sheet metals (30) to which the velvet ribbons (54) are adhered and provided with a plurality of cutters (212) at predetermined intervals; and
a cutter unit moving device which moves each head section (210) of the pair of cutter units (72, 74) synchronously in the same direction as the transfer direction of the sheet metals (30) to which the velvet ribbons (54) are adhered, swings each synchronously moving head section (210) in the direction perpendicular to the moving direction, inserts the plurality of cutters (212) into a gap between the front end and back end of the adjacent sheet metals (30) and thereby allows the plurality of cutters (212) to cut the velvet ribbons (54) simultaneously.

8. The film cartridge plate manufacturing apparatus (10) according to claim 7, wherein the pair of cutter units (72, 74) are provided with a displacement prevention member (270) which presses the sheet metals (30) transferred by the transfer device (42) against a conveyor of the transfer device (42) immediately before the plurality of cutters (212) cut the velvet ribbons (54) and thereby prevents any displacement from the conveyor.

9. The film cartridge plate manufacturing apparatus (10) according to claim 7 or 8, wherein the pair of cutter units (72, 74) are provided with a positioning member (268) which positions the head section (210) for a conveyor of the transfer device (42) immediately before the plurality of cutters (212) cut the velvet ribbons (54).

10. A film cartridge plate manufacturing apparatus (10) which puts a quasi-boat-shaped film cartridge plates (30) transferred by a transfer device (77) into a chute (50) and stores the film cartridge plates (30) therein, wherein:
the chute (50) is placed inclined a predetermined angle;
the film cartridge plates (30) are inserted into the chute (50) with the acutely-angled section formed at the end in the lead; and
when the acutely-angled section of the inserted film cartridge plate (30) collides with the film cartridge plate (30) which has already been stored and laid down, the lying film cartridge plate (30) stands up by a pushing force of the collision and is stored in the chute (50) in an upright position with the acutely-angled side down.

11. The film cartridge plate manufacturing apparatus (10) according to claim 10, wherein an inclination angle of the chute (50) is 20° to 45°.

12. The film cartridge plate manufacturing apparatus (10) according to claim 10 or 11, wherein a belt conveyor (320) for guiding the film cartridge plates (30) to the chute (50) is placed at an entrance of the chute (50).

13. The film cartridge plate manufacturing apparatus (10) according to any one of claims 10 to 12, wherein a member (340) for preventing popup of the film cartridge plate (30) is provided in an upper section of the chute (50).

14. The film cartridge plate manufacturing apparatus (10) according to any one of claims 10 to 13, wherein a conveyor (350) for ejecting the film cartridge plates (30) from the chute (50) is placed at an outlet of the chute (50).

15. The film cartridge plate manufacturing apparatus (10) according to claim 14, wherein a stopper (352) for receiving the film cartridge plate (30) placed most downstream of the film cartridge plate (30) stored in the conveyor (350) is provided in a movable manner along the conveyor (350) and the stopper (352) is moved according to an amount of storage.

16. The film cartridge plate manufacturing apparatus (10) according to claim 15, further comprising a transfer apparatus (360) which counts the film cartridge plates (30) stored in the conveyor (350), inserts a bifurcated partition (364) so that a certain number of film cartridge plates (30) are stored between the partition (364) and the stopper (352), extracts the certain number of film cartridge plates (30) and transfers the extracted film cartridge plates (30).

17. A film cartridge plate manufacturing apparatus (10) comprising a separation apparatus (16) which separates film cartridge plates (30) transferred by a transfer device (42) into OK products and NG products based on OK/NG information, wherein the separation apparatus (16) comprises:
a belt conveyor (76) placed downstream of the transfer device (42);
a plurality of attraction devices (78A-78G) which are placed and fixed in a circulation direction of the belt conveyor (76) at predetermined intervals and attract the film cartridge plate (30) transferred to the downstream of the transfer device (42) via a belt (77) of the belt conveyor (76);
a film cartridge plate storage section made up of an OK product storage section (50) and an NG product storage section (48) placed in a lower part of the belt conveyor (76); and
a control device (308) which controls ON/OFF of attraction power of at least one of the plurality of attraction devices (78A-78G) located above the film cartridge plate storage section based on the OK/NG information.

18. The film cartridge plate manufacturing apparatus (10) according to claim 17, wherein at least one of the plurality of attraction devices (78A-78G) located above the NG product storage section (48) of the film cartridge plate storage section is subjected to ON/OFF control by the control device (308), the at least one of the plurality of attraction devices (78A-78G) is subjected to OFF control by the control device (308) and thereby NG film cartridge plates (30) drop from the belt conveyor (76) into the NG product storage section (48).

19. The film cartridge plate manufacturing apparatus (10) according to claim 17 or 18, wherein the OK product storage section (50) of the film cartridge plate storage section is placed below a position separated a predetermined distance from the downstream in the transfer direction of one of the plurality of attraction devices (78A-78G) placed most downstream, and OK film cartridge plates (30) transferred to the separate position drop from the belt conveyor (76) into the OK product storage section (50) due to a reduction of the attraction power of the one of the plurality of attraction devices (78A-78G).

20. The film cartridge plate manufacturing apparatus (10) according to any one of claims 17 to 19, wherein:
the plurality of attraction devices comprise magnets (78A-78G);
at least one of the magnets located above the film cartridge plate storage section is an electromagnet (78B, 78C); and
the electromagnet (78B, 78C) is subjected to ON/OFF control by the control device (308).
